# EUROPÄISCHE PATENTSCHRIFT

(11) **EP 4 315 821 B1**
(45) Veröffentlichungstag und Bekanntmachung des Hinweises auf die Patenterteilung: **09.04.2025**
(21) Anmeldenummer: 22719840.5
(22) Anmeldetag: 30.03.2022
(51) Int. Cl.: H04N 1/60

(54) **VERFAHREN ZUR ANPASSUNG DER DRUCKERPARAMETER EINES DIGITALEN DRUCKERS**
METHOD FOR ADJUSTING PRINTER PARAMETERS OF A DIGITAL PRINTER
PROCÉDÉ D'AJUSTEMENT DES PARAMÈTRES D'IMPRIMANTE D'UNE IMPRIMANTE NUMÉRIQUE

(30) Priorität: 30.03.2021 EP 21165922
(43) Veröffentlichungstag der Anmeldung: 07.02.2024
(60) Teilanmeldung: 25161867.4
(73) Patentinhaber: SWISS KRONO Tec AG, 6004 Luzern (CH)
(72) Erfinder: DICKE, Sebastian, Bantikow 16868 (DE)
(74) Vertreter: Maikowski & Ninnemann Patentanwälte Partnerschaft mbB
(86) Internationale Anmeldenummer: PCT/EP2022/058387
(87) Internationale Veröffentlichungsnummer: WO 2022/207690

(56) Entgegenhaltungen:
- EP-A1- 3 578 939
- EP-A1- 3 961 166
- WO-A1-2014/154302
- US-A1- 2007 002 344
- US-A1- 2018 095 307
- VEYS CHARLES ET AL: "An ultra-low-cost active multispectral crop diagnostics device", 2017 IEEE SENSORS, IEEE, 29 October 2017 (2017-10-29), pages 1 - 3, XP033281439, DOI: 10.1109/ICSENS.2017.8234211
- ANONYMOUS: "ICMS(TM) zero Zertifizierung", 13 September 2019 (2019-09-13), XP055780828, Retrieved from the Internet <URL:https://www.ipac.at/palmCMSv3/_dateimanager/Download_Deutsch/ICMS_zero_Zertifizierung_DE.pdf> [retrieved on 20210301]
- ANONYMOUS: "IPAC ? Quality Inside ? Made in Europe: First inline colour measurement in operation - MÖBELMARKT", 13 September 2019 (2019-09-13), XP055780822, Retrieved from the Internet <URL:https://www.moebelmarkt.de/beitrag/ipac-quality-inside-made-in-europe-first-inline-colour-measurement-in-operation> [retrieved on 20210301]

## Beschreibung

### Gebiet der Erfindung

Die Erfindung betrifft ein Verfahren zur Anpassung der Druckerparameter eines digitalen Druckers, wobei ein Tonwerttarget mit 1 bis n Tonwertfeldern, wobei n ∈ N, auf ein Trägermaterial ausgegeben wird und zumindest ein Teil der Tonwertfelder hyperspektral vermessen wird. Aus den Messdaten wird ein digitales Referenzmuster erstellt. Das Tonwerttarget wird auf ein zweites Trägermaterial ausgegeben und zumindest ein Teil der Tonwertfelder wird wiederum hyperspektral vermessen. Aus den Messdaten wird ein digitales Muster erstellt, welches mit dem digitalen Referenzmuster verglichen wird. Es wird mindestens ein Ähnlichkeitswert ermittelt und wenn der Ähnlichkeitswert außerhalb eines vorgegebenen Toleranzbereichs liegt, erfolgt eine Anpassung mindestens eines Druckerparameters oder einer Kombination mehrerer Druckerparameter. Weiterhin betrifft die Erfindung eine Vorrichtung zur Durchführung des erfindungsgemäßen Verfahrens.

### Beschreibung

Die Farbe ist ein wesentliches Merkmal eines Druckdekors, welches durch verschiedene Techniken, wie z.B. Tiefdruck oder Digitaldruck erzeugt wird. Bei jeder dieser Techniken wird die gewünschte Erscheinung des Drucks durch Überlagerung von verschiedenen Pigmentschichten der Grundfarben erzielt. Das Tiefdruckverfahren ist eine Drucktechnik, bei der die abzubildenden Elemente als Vertiefungen in einer Druckform z.B. einer Druckwalze vorliegen, die vor dem Druck eingefärbt wird. Die Druckfarbe befindet sich vornehmlich in den Vertiefungen und wird aufgrund von Anpressdruck der Druckform und von Adhäsionskräften auf den zu bedruckenden Gegenstand übertragen. Beim Digitaldruck hingegen wird das Druckbild direkt von einem Computer in einen Digitaldrucker, wie z.B. ein Laserdrucker oder Tintenstrahldrucker übertragen, wobei die Verwendung von statischen Druckformen entfällt. Beim Digitaldruck werden üblicherweise die Grundfarben Cyan, Magenta, Gelb und Schwarz (CYMK) verwendet. Das CMYK-Farbmodel ist ein subtraktives Farbmodel, wobei die Abkürzung CMYK für die drei Farbbestandteile Cyan, Magenta, Yellow und den Schwarzanteil Key als Farbtiefe steht. Mit diesem Farbsystem lässt sich ein Farbraum (Gamut) abbilden, der vielen Anforderungen aus verschiedensten Bereichen genügt.

Die Druckdekore werden auf Trägermaterialien aufgebracht. Als Trägermaterialien eignen sich beispielsweise Papier, Glas, Metall, Folien, Holzwerkstoffplatten, insbesondere MDF- oder HDF-Platten, WPC-Platten, Furniere, Lackschichten, Kunststoffplatten und anorganische Trägerplatten. Bevorzugt gemäß der Erfindung sind Holzwerkstoffplatten.

Mit einem Dekor versehene Holzwerkstoffplatten werden häufig zur Herstellung von Fußbodenlaminat oder in Form von Wand- und Deckenverkleidungselementen verwendet. Zur Dekorierung der Holzwerkstoffplatten gibt es mehrere Ansätze. So wurde in der Vergangenheit häufig die Beschichtung von Holzwerkstoffplatten mit einem Dekorpapier genutzt, wobei der Vielfältigkeit an verschiedengemusterten Dekorpapieren keine Grenzen gesetzt sind. Als Alternative zur Verwendung von Dekorpapieren auf Holzwerkstoffplatten hat sich die Möglichkeit des direkten Bedruckens von Holzwerkstoffplatten entwickelt, wobei ein Bedrucken von Papier und dessen nachträgliches Kaschieren oder Direktbeschichten auf die Holzwerkstoffplatten entfällt. Die hierbei hauptsächlich zum Einsatz kommenden Drucktechniken sind das Tiefdruck- und das Digitaldruckverfahren.

Ein offenes Problem, das in allen Bereichen der farbbasierten bzw. farbverarbeitenden Industrie ein zentrales Thema darstellt, ist die Erreichung eines hohen Grades an Farbtreue, in anderen Worten die Fähigkeit, vorgegebene Farben mit minimaler chromatischer Differenz in Bezug auf ein Original, und zwar insbesondere auch auf unterschiedlichen Trägermaterialien bzw. Bedruckstoffe, zu reproduzieren. Ein wesentlicher Schritt hierfür ist unter anderem, dass eine stetige Kontrolle der Druckqualität im gesamten Druckprozess gewährleistet wird. Eine zentrale Qualitätsanforderung bei allen Druckverfahren besteht dabei darin, dass Farbabweichungen zwischen einem Urmuster eines Dekors und weiteren Drucken des Dekors nur unterhalb eines vorgegebenen Sollwertes auftreten. Die Druckqualität bezeichnet in diesem Zusammenhang, wie gut ein Druck eines Dekors mit dem Urmuster übereinstimmt. Je größer die Übereinstimmung, desto höher ist die Druckqualität.

Einen wesentlichen Einfluss auf die Druckqualität hat dabei der für den Druck verwendete Drucker. Es ist bekannt, dass in den in der Digitaldruckindustrie verwendeten Druckern mehrere Druckköpfe in einer Reihe angeordnet werden und jeder einzelne für den Druck eines Teilabschnittes eines Dekors "zuständig" ist. Weiterhin bekannt ist, dass sich über die Zeit das Druckverhalten der einzelnen Druckköpfe und damit deren Druckqualität verändert. Das Druckverhalten bezeichnet die Druckeigenschaften eines Druckkopfes, das heißt die Dichte, die Druckintensität und die Farbstärke die gedruckte werden. Diese Druckeigenschaften können sich mit der Zeit unregelmäßig verändern.

Teilweise werden in den Druckern auch die Druckköpfe in Doppelreihen eingesetzt, das heißt es werden zwei Druckköpfe für einen zu druckenden Bereich hintereinander angeordnet. Durch diese Anordnung kann die Druckgeschwindigkeit durch eine Vergrößerung der Auflösung in der Drucklänge oder die Druckqualität erhöht werden. Der erste Druckkopf druckt 50% des Druckmediums und der zweite Druckkopf die anderen 50 % des Druckmediums in diesem Bereich. Fällt einer der beiden Druckköpfe aus, ist die dadurch entstehende Fehlstelle unauffälliger, da zumindest 50% des Druckmediums aufgebracht wurden.

Um ein hochqualitatives Druckergebnis zu ermöglichen, muss das Druckverhalten der Druckköpfe eines Druckers überwacht und gegebenenfalls kalibriert und/oder angepasst werden. Aus dem Stand der Technik ist bekannt, dass hierfür verschiedene Tonwertstufen der Druckmedien, wie zum Beispiel der Druckfarben CMRK als sogenannte Tonwertfelder in einem Tonwerttarget ausgegeben und mit optischen Messverfahren oder manuelle Punktmessungen mit einem Densitometer vermessen werden. Anschließend werden diese Messwerte dazu verwendet, um die Druckkopfsoftware oder die Software die die Druckdateien und/oder Separationsdaten zu beeinflussen und/oder zu ändern und/oder anzupassen und/oder zu steuern.

Die aus dem Stand der Technik bekannten Verfahren weisen jedoch entscheidende Nachteile auf. Die manuellen Punktmessungen mit einem Densitometer sind sehr zeitaufwendig, da jeder Messbereich von Hand gemessen werden muss. Eine Automatisierung dieser Messungen ist im Stand der Technik nicht bekannt. Darüber hinaus ist bei der Messung mit einem Densitometer nur eine punktuelle Messung des flächigen Tonwertfeldes möglich. Die Informationen, die in der restlichen Fläche des gedruckten Tonwertfeldes enthalten sind, können hingegen nicht genutzt werden. Aufgrund der punktuellen Erfassung kann es jedoch zu Ungenauigkeiten im Messergebnis kommen. Aus verschiedenen Gründen weist ein Tonwertfeld unter Umständen keine homogene Farbgebung auf, sondern kann auch Farbabweichungen enthalten. Dies kann beispielsweise durch ein uneinheitliches Trägermaterial, eine fehlerhafte Primerschicht oder Fehler beim Druckprozess verursacht werden. Wird das Tonwertfeld dann an einer Stelle punktuell vermessen, die eine solche Farbabweichung aufweist, so wird ein falscher Tonwert für dieses Tonwertfeld ermittelt. Beispielsweise könnte in einem Tonwertfeld, welches sehr helles Gelb aufweist, ein dunkler Punkt oder ein heller leuchtender Punkt vermessen werden. In beiden Fällen würde ein Tonwert für das Tonwertfeld ermittelt werden, der nicht repräsentativ für dieses Tonwertfeld ist. Dies würde falsche Korrekturen oder Anpassungen im Druckprozess nach sich ziehen.

Die rein optisch basierten Systeme aus dem Stand der Technik weisen ebenfalls Beschränkungen auf, da diese lediglich auf der Basis der in ihnen integrierten Chips und/oder Sensoren arbeiten, welche auf lichtempfindlichen Bildsensoren basieren. Insbesondere nutzen rein optisch basierte Systeme keine spektralen Messverfahren und weisen entsprechend Sensoren auf, die für spektrale Messungen nicht ausgelegt sind.

Automatisierte Kontroll- und Anpassungsprozesse sind mit diesen Verfahren nicht möglich.

Weiterhin ist bekannt, dass in Druckprozessen, in denen Druckreihen produziert werden, sehr oft und in der Regel zum Teil mehrmals täglich Farbprofile kontrolliert und angepasst werden müssen, da sich durch verschiedene Parameter im Druckprozess Farbräume verändern. Unter anderem haben die Druckintensität der Druckköpfe, die verwendete Tintencharge, die verwendete Papiercharge oder der Rasterwalzenverschleiß einen Einfluss. Die Kontrolle von Farbprofilen wird durch ein Colormangement durchgeführt. Hierfür werden verschiedene optische Messverfahren verwendet und eine geeignete Software, wie zum Beispiel die Colorgatesoftware der Firma Colorgate. Aus dem Stand der Technik stehen hierfür verschiedene optische Messverfahren, wie zum Beispiel "Cube" von der Firma Colorgate sowie spektrale Punktmessgeräte, wie zum Beispiel "X-Rite iOne" zur Verfügung. Das Colormanagement nimmt dabei Einfluss auf die digitalen Druckdaten des zu druckenden Dekors und erstellt dabei im Allgemeinen ein korrigiertes Farbprofil, um unerwünschte Änderungen im Druckprozess zu korrigieren. Eine Anpassung und/oder Kalibrierung des Druckverhaltens der Druckköpfe eines Druckers ist dabei nicht vorgesehen.

Werden jedoch nur Farbprofile bzw. Farbräume angepasst und/oder korrigiert, besteht die Gefahr, dass sich ein vorgegebenes Urmuster unter Umständen nicht mehr erreichen lässt. Drucken zum Beispiel Druckköpfe nicht mehr so intensiv wie zum Zeitpunkt der Erstellung des Urmusters, kann dies nicht durch Colormanagement ausgeglichen werden. Eine häufige Anwendung von Colormanagement kann zur Folge haben, dass man sich mit der Korrektur immer weiter vom eigentlichen Urzustand entfernt, was zu einem Verlust an Druckqualität führen kann. Darüber hinaus bedeutet häufiges Colormanagement teilweise einen hohen Zeitaufwand, da alle Druckdaten neu mit dem Farbprofil belegt und Separationsdateien erstellt werden müssen.

Aus dem Stand der Technik sind weiterhin die folgenden Verfahren bekannt:
Die DE 10 2017 202 031 A1 befasst sich mit einer Korrektur von Farbabweichungen in Digitaldruckmaschinen. Ziel des Verfahrens ist es, eine farbgetreue Wiedergabe einer digitalen Druckvorlage im Druckprozess zu ermöglichen. Ein Testmuster wird hierbei mit einem Farbmessgerät vermessen. Durch die Verwendung von Farbmessgeräten wird eine punktuelle Messung des Testmusters, mit den damit verbundenen Nachteilen, vorgenommen.

Die EP 3 020 565 B1 befasst sich mit einem Verfahren zur Erzeugung von farb- und detailgetreuen Wiedergaben eines Druckdekors mit verschiedenen Drucktechniken. Gegenstand des Verfahrens ist es, Dekordrucke auf Trägermaterialien mit vergleichbarer Qualitätsanmutung zu erzeugen, unabhängig davon, ob das Dekor digital oder analog gedruckt wurde.

Die WO 2014/154302 A1 offenbart ein Verfahren zur Kalibrierung eines Druckers, welches eine Messung von aktuellen kolorimetrischen Parametern eines gedruckten Kalibrationsmusters umfasst, einen Vergleich dieser Parameter mit einer entsprechenden Referenzmessung und das Bestimmen einer aktuellen Linearisierung auf Basis dieses Vergleichs.

Die Aufgabe der Erfindung ist es, ein Verfahren zur Verfügung zu stellen, mit dem die Druckqualität in einem Druckprozess erhöht werden kann und die Nachteile des Standes der Technik beseitigt werden.

Diese Aufgabe löst die vorliegende Erfindung durch ein Verfahren zur Anpassung der Druckerparameter und/oder der Separationsdaten eines digitalen Druckers nach Anspruch 1. Das erfindungsgemäße Verfahren weist unter anderem die folgenden Schritte auf:
a) Erstellen und Speichern eines digitalen Tonwerttargets mit 1 bis n Tonwertfeldern, wobei n ∈ N;
b) Ausgabe des Tonwerttargets auf ein erstes Trägermaterial unter ersten Druckbedingungen mit ersten Druckerparametern durch einen ersten digitalen Drucker;
c) Hyperspektrales flächiges vermessen zumindest eines Teils des in Schritt b) ausgegebenen Tonwerttargets;
d) Bildung von mindestens einem Mittelwert der hyperspektralen Daten zugeordnet zu einem Bereich eines Tonwertfeldes eines Tonwerttargets, der von einem Druckerkopf im Druck abgedeckt wird;
e) Errechnen von farbmetrischen Daten und/oder Farbdichtewerten aus dem mindestens einen Mittelwert der hyperspektralen Daten;
f) Erstellen eines digitalen Referenzmusters, aufweisend mindestens die farbmetrischen Daten und/oder die Farbdichtewerte zugeordnet zu dem Bereich des Tonwertfeldes, der für die Bildung des mindestens einen Mittelwertes der hyperspektralen Daten verwendet wurde;
g) Ausgabe des digitalen Tonwerttargets auf ein zweites Trägermaterial unter zweiten Druckbedingungen mit zweiten Druckerparametern durch den ersten digitalen Drucker oder einen zweiten digitalen Drucker;
h) Hyperspektrales flächiges vermessen zumindest eines Teils des in Schritt g) ausgegebenen Tonwerttargets;
i) Bildung von mindestens einem Mittelwert der hyperspektralen Daten zugeordnet zu einem Bereich eines Tonwertfeldes eines Tonwerttargets, der von einem Druckerkopf im Druck abgedeckt wird;
j) Errechnen von farbmetrischen Daten und/oder Farbdichtewerten aus dem mindestens einen Mittelwert der hyperspektralen Daten;
k) Erstellen eines digitalen Musters, aufweisend mindestens die farbmetrischen Daten und/oder die Farbdichtewerte zugeordnet zu dem Bereich des Tonwertfeldes, der für die Bildung des mindestens einen Mittelwertes der hyperspektralen Daten verwendet wurde;
l) Vergleich des digitalen Referenzmusters mit dem digitalen Muster und ermitteln von mindestens einem Ähnlichkeitswert; und
m) Anpassen mindestens eines Druckerparameters oder einer Kombination mehrerer Druckerparameter des ersten oder zweiten digitalen Druckers, wenn der mindestens eine Ähnlichkeitswert außerhalb mindestens eines vorgegebenen Toleranzbereichs liegt, wobei die Druckerparameter ausgewählt sind aus der Gruppe aufweisend Separationsdaten, elektrische Spannung im Druckerkopf, Softwaresteuerung des Druckers und Temperatur.

Weiterhin stellt die Erfindung eine Vorrichtung, insbesondere Druckanlage, zur Verfügung, die dazu eingerichtet ist, ein Verfahren zur Anpassung der Druckerparameter und/oder der Separationsdaten eines digitalen Druckers gemäß einem der Ansprüche 1 bis 13 durchzuführen. Die erfindungsgemäße Vorrichtung umfasst:
- Mindestens ein hyperspektrales Flächenmessgerät;
- Mindestens eine Recheneinheit;
- Mindestens einen ersten digitalen Drucker zum Drucken eines Tonwerttargets;
- Optional einen zweiten digitalen Drucker zum Drucken eines Tonwerttargets;
- Optional mindestens ein Mittel zur Weiterverarbeitung eines auf ein Trägermaterial gedruckten Dekors.

Gemäß dem vorliegenden Verfahren wird in einem ersten Schritt ein digitales Tonwerttarget mit 1 bis n Tonwertfeldern durch eine geeignete Software erstellt und gespeichert, wobei n ∈ N. Die Tonwertfelder des Tonwerttargets weisen zumindest einen Teil der Farbbestandteile des für den Druck verwendeten Farbsystems auf. Im Digitaldruck häufig verwendete Farbsysteme sind beispielsweise das CYMK-Farbsystem, das CRYK-Farbsystem oder auch 1-farbige, 5-farbige, 6-farbige, 7-farbige oder auch 8-farbige Farbsystem. Das CRYK-Farbsystem bezeichnet ein Farbsystem mit den Farbbestandteilen Cyan, Rot, Yellow und Schwarz. Das häufig verwendete CYMK-Farbsystem ist ein subtraktives Farbmodel, wobei die Abkürzung CMYK für die drei Farbbestandteile Cyan, Magenta, Yellow und den Schwarzanteil Key als Farbtiefe steht. In einer bevorzugten Ausführungsform weisen die Tonwertfelder des Tonwerttargets jeden der Farbbestandteile des verwendeten Farbsystems auf. Jedes Tonwertfeld des Tonwerttargets weist dabei vorzugsweise genau einen Farbestandteil mit genau einem Tonwert auf. Jedes der bereits genannten Farbsysteme kann in dem erfindungsgemäßen Verfahren genutzt werden. Besonders bevorzugt wird das CYMK-Farbsystem oder das CRYK-Farbsystem verwendet.

Der Begriff Tonwert bezieht sich auf die unterschiedlichen Stufen zwischen Hell und Dunkel eines Farbbestandteils, wenn dieser auf ein Trägermaterial gedruckt wird, oder auch in einem digitalen Datensatz. Er beschreibt dabei bei einem Bildelement (Punkt oder Pixel) einen Farbwert oder im Fall des Farbbestandteils Schwarz einen Grauwert innerhalb eines vorgegebenen Farb- bzw. Graustufenspektrums, angegeben in 0 - 100 %. Dabei bedeutet:
- 100 % maximale Dunkelheit bzw. Farbbedeckung (Vollton) des Abbildungsmediums; und
- 0 % komplette Transparenz des Trägermaterials beim Druck.

Besonders bevorzugt weist das Tonwerttarget Tonwertfelder für alle Farbbestandteile des verwendeten Farbsystems auf, wobei für jeden Farbbestandteil Tonwertfelder mit mehreren unterschiedlichen Tonwerten vorhanden sind.

In einer Ausführungsform der vorliegenden Erfindung weist das Tonwerttarget für jeden Farbbestandteil zwischen 1 und 500 Tonwertfelder mit unterschiedlichen Tonwerten, bevorzugt zwischen 10 und 100 Tonwertfelder mit unterschiedlichen Tonwerten, besonders bevorzugt zwischen 30 und 60 Tonwertfelder mit unterschiedlichen Tonwerten auf.

In einer Ausführungsform der vorliegenden Erfindung weisen die Tonwerte verschiedener Tonwertfelder eines Farbbestandteils eine lineare Abstufung der Tonwerte auf. Beispielsweise können sich die Tonwerte jeweils im Bereich zwischen 0,2 % und 100 %, bevorzugt im Bereich zwischen 0,5 % und 10 %, besonders bevorzugt im Bereich zwischen 1 % und 3 % voneinander unterscheiden.

Eine geeignete Software für die Erstellung und das Speichern des digitalen Tonwerttargets, wie beispielsweise Colorgate der Firma Colorgate oder Adobe Photoshop ist dem Fachmann bekannt.

In einem weiteren Verfahrensschritt wird das digitale Tonwerttarget auf ein erstes Trägermaterial unter ersten Druckbedingungen mit ersten Druckerparameter durch einen ersten digitalen Drucker ausgegeben.

Geeignete Trägermaterialien sind dabei ausgewählt aus der Gruppe aufweisend Papier, Glas, Metall, Folien, Holzwerkstoffplatten, insbesondere MDF- oder HDF-Platten, WPC-Platten, Furniere, Lackschichten, Kunststoffplatten und anorganische Trägerplatten.

Druckbedingungen im Sinne der Erfindung bezeichnet alle den Druck auf einem digitalen Drucker beeinflussenden Randbedingungen. Insbesondere zählen hierzu:
- Verwendete Tinte (Tintencharge, Hersteller der Tinte),
- Verwendetes Trägermaterial (Charge des Trägermaterials, Hersteller des Trägermaterials)
- Verwendung eines Primers und Menge des verwendeten Primers,
- Viskosität der eingesetzten Flüssigkeiten,
- Umgebungsklima, insbesondere Temperatur und Luftfeuchte,
- Zustand der Oberfläche des Trägermaterials,
- Alter und Rezept des verwendeten Primers und/oder der verwendeten Tinte.

Ein Primer oder auch eine Vorgrundierung wird genutzt, um Farbabweichungen zwischen den gedruckten Dekoren einer Produktionscharge bzw. auch zwischen identischen gedruckten Dekoren verschiedener Produktionschargen von vornherein so gering wie möglich zu halten. Darüber hinaus reduziert der Einsatz eines Primers die Menge der Tinte, die für einen Druck verwendet werden muss. Ohne Primer dringt die Tinte, insbesondere bei der Verwendung von Papier als Trägermaterial, unter Umständen weit in das Trägermaterial ein und es muss eine größere Menge Tinte verwendet werden, um ein gewünschtes Druckergebnis zu erreichen. Da der Primer deutlich preiswerter ist als Drucktinte, ist mit dessen Verwendung eine entsprechende Kostenersparnis verbunden.

Druckerparameter bezeichnen im Sinne der Erfindung alle Parameter im digitalen Druckprozess, die unmittelbar mit dem für den Druck verwendeten digitalen Drucker im Zusammenhang stehen und Einfluss auf das Druckergebnis haben. Hierzu zählen insbesondere:
- Druckköpfe des Druckers,
- Softwaresteuerung des Druckers,
- Separationsdaten,
- elektrische Spannung im Druckerkopf,
- Temperatur des Druckers.

Entsprechend dem erfindungsgemäßen Verfahren wird damit das Tonwerttarget unter genau definierten ersten Bedingungen auf ein erstes Trägermaterial durch einen ersten digitalen Drucker aufgebracht. Ein Tonwertfeld kann über die gesamte Breite des Trägermaterials aufgebracht werden und in Druckrichtung eine Länge zwischen 1 mm und 50 mm aufweisen, bevorzugt zwischen 5 mm und 25 mm, besonders bevorzugt zwischen 10 mm und 15 mm. In dieser Ausführungsform werden bevorzugt mehrere Tonwertfelder hintereinander in Druckrichtung auf dem Trägermaterial aufgebracht. Die Tonwertfelder können aber auch nur in einem Bereich des Trägermaterials aufgebracht werden, wobei ein Tonwertfeld eine Breite zwischen 0,01 mm und 50 mm, bevorzugt zwischen 0,1 mm und 1 mm, besonders bevorzugt zwischen 0,2 mm und 0,5 mm aufweisen, mit den bereits beschriebenen Längenmaßen. Die Tonwertfelder des Tonwerttargets können erfindungsgemäß daher mit allen Druckerköpfen des verwendeten digitalen Druckers ausgegeben werden, oder nur von einem Teil der Druckerköpfe des verwendeten digitalen Druckers.

In einer Ausführungsform der vorliegenden Erfindung werden mehrere Tonwertfelder lückenlos hintereinander in Druckrichtung aufgebracht

Zumindest ein Teil des in dem vorangegangenen Verfahrensschritt ausgegebenen Tonwerttargets wird hyperspektral vermessen. Das heißt, dass nur ein Teil aller ausgegebenen Tonwertfelder vermessen werden kann, oder es kann ein Teil der Fläche jedes der ausgegebenen Tonwertfelder vermessen werden. In einer Ausführungsform der Erfindung wird damit zumindest ein Teil der Fläche des in dem vorangegangenen Verfahrensabschnitt ausgegebenen Tonwerttargets hyperspektral vermessen.

In einer bevorzugten Ausführungsform wird zumindest die Fläche eines Tonwertfeldes eines Tonwerttargets hyperspektral flächig vermessen, die von einem Druckerkopf im Druck abgedeckt wird. Unter hyperspektralem flächigen vermessen ist erfindungsgemäß somit zu verstehen, dass ein Teil einer Fläche eines Tonwertfeldes eines Tonwerttargets hyperspektral vermessen wird. Bevorzugt wird zumindest die Fläche eines Tonwertfeldes eines Tonwerttargets hyperspektral vermessen, die von einem Druckerkopf im Druck abgedeckt wird. In einer Ausführungsform wird daher zumindest eine Fläche eines Tonwerttargets mit einer Breite zwischen 0,01 mm und 50 mm und einer Länge zwischen 1 mm bis 50 mm hyperspektral flächig vermessen. Die Breite ist als Richtung entsprechend der Druckbreite des digital Druckers zu verstehen und die Länge als Richtung entsprechend der Drucklänge, also die Richtung, in der das Trägermaterial den digitalen Drucker durchläuft.

Besonders bevorzugt wird die gesamte Fläche jedes der ausgegebenen Tonwertfelder vermessen. In einer Ausführungsform der vorliegenden Erfindung wird die hyperspektrale Messung einmal durchgeführt, in einer weiteren Ausführungsform der Erfindung wird die hyperspektrale Messung mehrmals, bevorzugt 2 bis 5 mal, besonders bevorzugt 2 bis 3 mal durchgeführt. Durch das mehrfache Messen kann die Genauigkeit des erfindungsgemäßen Verfahrens weiter erhöht werden.

Insbesondere wird daher besonders bevorzugt die gesamte Fläche jedes der ausgegebenen Tonwertfelder hyperspektral flächig vermessen. Bei der hyperspektralen flächigen Vermessung wird damit eine Fläche hyperspektral vermessen die deutlich über die Ausdehnung eines Punktes im Druck (Punktmessung) hinausgeht.

Erfindungsgemäß wird ein flächiger Abschnitt eines analogen Referenzmusters mit einem hyperspektralen Flächenmessgerät vermessen. Die Daten werden anschließend gespeichert. Das hyperspektrale Flächenmessgerät führt eine hyperspektrale Flächenmessung durch, wofür ein hyperspektrales Sensorsystem verwendet wird.

Unter "hyperspektralem Sensorsystem" versteht man ein Sensorsystem, das Bilder von sehr vielen, eng beieinanderliegenden Wellenlängen aufzeichnen kann. Das Auge sieht die Umwelt multispektral in den Wellenlängen der Grundfarben Rot, Grün und Blau. Hyperspektrale Systeme zeichnen Daten von 20 bis 250 unterschiedlichen Kanälen auf, die von Wellenlängen im ultravioletten Bereich bis zum langwelligen Infrarot reichen. Der Vorteil von hyperspektralen Systemen ist, dass Bilder mit einer sehr hohen Detailgenauigkeit und Auflösung aufgenommen und gespeichert werden.

Die Messung von ortsaufgelösten spektroskopischen Informationen, insbesondere durch spektroskopische Kameras, ist zum Beispiel aus der bildgebenden Spektroskopie bekannt. Hierbei kann ortsaufgelöst zum Beispiel ein multispektrales oder ein hyperspektrales Bild aufgenommen werden. Das multispektrale Bild zeichnet sich dabei dadurch aus, dass mehrere diskrete Wellenlängenbereiche (Banden) genutzt werden, wobei die einzelnen Banden nicht aneinandergrenzen. Damit können innerhalb eines vorgegebenen Spektralbereiches selektiv für bestimmte diskrete Wellenlängenbereiche ortsaufgelöst Daten gemessen werden. Bei der hyperspektralen Bildgebung werden ebenfalls mehrere Wellenlängenbereiche genutzt, im Gegensatz zur multispektralen Bildgebung sind die Wellenlängenbereiche jedoch kontinuierlich und grenzen aneinander an. So dass über den gesamten genutzten Spektralbereich ortsaufgelöst Daten gemessen werden [C. Veys et al., "An Ultra-Low-Cost Active Multispectral Crop Diagnostics Device", Paper veröffentlicht auf der IEEE Sensors 2017 Conference, Glasgow, UK, https://doi.org/10.1109/ICSENS.2017.8234211]. Beide Methoden zählen zu den spektralen Bildgebungsmethoden, weisen aber spezifische Merkmale auf in denen sie sich unterscheiden. Hyperspektrale Bildgebung und multispektrale Bildgebung können folglich als Untergruppen der spektralen Bildgebung verstanden werden.

Die hyperspektrale Flächenmessung kann mittels eines hyperspektralen Systems, wie beispielsweise mit einer Hyperspektralkamera oder besonders bevorzugt mittels eines Hyperspektralscanners erfolgen. Hyperspektrale Messsysteme wurden bereits Mitte der 1980er Jahre von der NASA im Rahmen des "Airborne Imaging Spectrometer (AIS)" entwickelt und sind dem Fachmann daher bereits lange bekannt [W.C. Chiou, "NASA image-based geological expert system-development project for hyperspectral imageanalysis", App.Opt. 24(14), 2085-2091 (1985)]. Es gibt verschiedene Möglichkeiten hyperspektrale Bilder zu gewinnen, eine verbreitet genutzte ist die Pushbroom-Methode mit deren Hilfe mit einem Flächensensor spektrale und örtliche Informationen gewonnen werden [M. Michelsburg, "Materialklassifikation in optischen Inspektionssystemen mithilfe hyperspektraler Daten", Dissertation, Karlsruher Institut für Technologie KIT, 2014, DOI:10.544/KSP/1000043415]. Diese Methode wird im Bereich der Farbmessung auf dekorativen Oberflächen im Farbmesssystem ACMS^{®} der Firma IPAC bereits seit 2007 angewendet und im Farbmesssystem ICMS^{®} der Firma IPAC seit 2019 ["IPAC - Advanced Colour Management System", Druckerstammtisch Hochschule der Medien Stuttgart, 05.04.2016; "Erste Inline-Farbmessung in Betrieb", Material+Technik Möbel 06119, S. 43, www.material-technik.de/e-magazine/material-technik-moebel-06-19].

Im Stand der Technik ist ein entsprechendes Verfahren zur Erzeugung hyperspektraler Bilder als ACMS^{®} (Advanced Colour Measurement System) bekannt. Hyperspektrale Systeme verfügen über eine Vielzahl von Detektoren. Als Ergebnis der Aufzeichnung entsteht ein hyperspektraler Datenwürfel mit zwei räumlichen und einer spektralen Dimension. Zur Erzeugung dieses hyperspektralen Datenwürfels stehen vier grundlegende Techniken zur Verfügung. Mit einem so genannten Schnappschuss wird der gesamte Datensatz mit einem einzigen Detektor-Output geliefert. Beim räumlichen Scannen liefert jeder Detektor-Output das Spektrum von einem schmalen Streifen der Vorlage. Beim spektralen Scannen liefert jeder Detektor-Output eine monochromatische, räumliche Karte der Vorlage. Beim räumlich-spektralen Scannen liefert jeder Detektor-Output eine spektral kodierte, räumliche Karte der Vorlage. Bekannte Systeme sind die hyperspektrale Flächenmessgeräte ACMS^{®} und ICMS^{®} der Firma IPAC, wobei das ACMS^{®} offline im Druckprozess angewendet wird und das ICMS^{®} inline im Druckprozess Verwendung findet.

Die hyperspektrale Flächenmessung birgt den Vorteil in sich, dass eine Vorlage mittels hyperspektraler Flächenmessung vermessen wird und anschließend ein Mittelwert der gemessenen Daten berechnet wird. Dieser Mittelwert der gemessenen Daten ist repräsentativ für die hyperspektral vermessene Vorlage. Dabei kann die gesamte Vorlage abschnittsweise mittels hyperspektraler Flächenmessung vermessen werden, wobei für jeden Abschnitt ein Mittelwert der zugehörigen Daten berechnet wird. Die einzelnen Abschnitte grenzen dabei aneinander an, weisen jedoch keine Überlappung miteinander auf.

Vorteilhafterweise kann damit mit dem erfindungsgemäßen Verfahren ein Teil der Fläche eines Tonwertfeldes oder die gesamte Fläche eines Tonwertfeldes hyperspektral vermessen werden, wobei aus den gemessenen Daten ein Mittelwert gebildet wird. Dieser Mittelwert ist dann repräsentativ für das vermessene Tonwertfeld.

Bevorzugt wird eine Fläche des Tonwertfeldes mit einer Breite zwischen 0,01 mm und 50 mm, bevorzugt zwischen 0,1 mm und 1 mm, besonders bevorzugt zwischen 0,2 mm und 0,5 mm und einer Länge zwischen 1 mm bis 50 mm, bevorzugt zwischen 5 mm und 25 mm, besonders bevorzugt zwischen 10 mm und 15 mm genutzt, um aus den für diese Fläche ermittelten hyperspektralen Messdaten einen Mittelwert zu bilden. Die Breite ist als Richtung entsprechend der Druckbreite des digital Druckers zu verstehen und die Länge als Richtung entsprechend der Drucklänge, also die Richtung, in der das Trägermaterial den digitalen Drucker durchläuft.

In einer bevorzugten Ausführungsform wird mindestens ein Mittelwert der hyperspektralen Daten zugeordnet zu einem Bereich eines Tonwertfeldes eines Tonwerttargets gebildet, wobei der Bereich eines Tonwertfeldes eines Tonwerttargets von einem Druckerkopf im Druck abgedeckt wird.

In einer besonders bevorzugten Ausführungsform werden Mittelwerte der hyperspektralen Daten zugeordnet zu verschiedenen Bereichen von Tonwertfeldern eines Tonwerttargets gebildet, wobei die verschiedenen Bereiche der Tonwertfelder eines Tonwerttargets jeweils von einem Druckerkopf im Druck abgedeckt werden. In dieser Ausführungsform wird damit jeweils ein Mittelwert für verschiedene Flächen der Tonwertfelder ermittelt, wobei jede dieser Flächen der Tonwertfelder durch einen Druckerkopf des digital Druckers gedruckt wurde. Die Mittelwerte für die verschiedenen Flächen der Tonwertfelder des Tonwerttargets sind daher jeweils dem Druckerkopf zugeordnet, der die jeweilige Fläche des Tonwertfeldes gedruckt hat.

Erfindungsgemäß können daher für ein Tonwertfeld die hyperspektralen Daten mehrerer Bereiche des Tonwertfeldes ausgewertet werden, so dass für jeden Bereich jeweils Mittelwerte der Messdaten gebildet werden. Bevorzugt grenzen die einzelnen Bereiche aneinander an, überlappen sich jedoch nicht. Besonders bevorzugt entspricht die Größe jedes Bereichs, der zur Mittelwertbildung genutzt wird, dem Bereich, der von einem Druckerkopf im Druck abgedeckt wird. In dieser Ausführungsform können dann jedem Druckerkopf Mittelwerte der hyperspektralen Messung eines Tonwertes eines Tonwertfeldes zugeordnet werden. Damit ist es möglich, die Druckqualität jedes Druckerkopfes im verwendeten Drucker zu überprüfen.

Erfindungsgemäß können damit alle Druckerköpfe überprüft werden oder aber auch nur ausgewählte Druckerköpfe, je nachdem welche Bereiche der Tonwertfelder des Tonwerttargets zur Mittelwertbildung herangezogen werden. Es wird daher ein Mittelwert der hyperspektralen Daten für zumindest einen Bereich eines Tonwertfeldes eines Tonwerttargets gebildet, der von einem Druckerkopf im Druck abgedeckt wird. In einer Ausführungsform der vorliegenden Erfindung wird ein Mittelwert der hyperspektralen Daten für jeden Bereich jedes Tonwertfeldes eines Tonwerttargets gebildet, der von einem Druckerkopf im Druck abgedeckt wird. Damit wird zugeordnet zu jedem Druckerkopf ein Mittelwert für jedes der 1 bis n Tonwertfelder eines Tonwerttargets gebildet.

Die Bildung der Mittelwerte erfolgt daher erfindungsgemäß jeweils zugeordnet zu den für den Druck dieser Fläche bei der Ausgabe des Tonwerttargets verwendeten Druckerköpfen, das heißt es kann damit mindestens einem Druckerkopf ein Mittelwert zugeordnet werden. Folglich wird zumindest die Fläche eines Tonwertfeldes hyperspektral flächig vermessen, die für die Bildung des mindestens einen Mittelwertes verwendet wird.

In einer Ausführungsform der vorliegenden Erfindung können die Mittelwerte nicht nur zugeordnet zu den Druckerköpfen gebildet werden, sondern sogar zugeordnet zu den einzelnen Düsen der Druckerköpfe. Hierdurch wird eine Anpassung von Druckerparametern möglich, die sich auf einzelne Düsen der Druckerköpfe auswirken, zum Beispiel die Steuerung der elektrischen Spannung einzelner Druckerdüsen.

Die Auswahl der Fläche, die für die Bildung eines Mittelwertes herangezogen wird, kann in einer Ausführungsform der Erfindung durch eine Vorgabe der Breite und Länge der Fläche vorgenommen werden. Angaben über die Größe der Fläche wurden bereits gemacht. In einer weiteren Ausführungsform der Erfindung kann die Fläche, die für die Bildung eines Mittelwertes genutzt wird durch Positionsmarken auf dem Trägermaterial bestimmt werden. In einer weiteren Ausführungsform der Erfindung kann die Fläche, die für die Bildung eines Mittelwertes genutzt wird durch Zähler und oder Messeinheiten auf der Traverse bestimmt werden. Die Positionsmarken, Zähler und/oder Messeinheiten werden bei der hyperspektralen Flächenmessung erkannt. In jedem Fall kann eine Fläche, die für die Bildung eines Mittelwertes herangezogen wird durch die beschriebenen Verfahren sicher einem Druckerkopf zugeordnet werden.

Aus den Messdaten der hyperspektralen Flächenmessung können durch eine geeignete Software farbmetrische Daten ermittelt werden und/oder Farbdichtewerte ermittelt werden. Eine geeignete Software ist dem Fachmann bekannt und ist im Allgemeinen in dem hyperspektralen Flächenmessgerät mit umfasst.

In einer Ausführungsform der Erfindung werden farbmetrische Daten und/oder Farbdichtewerte aus dem mindestens einen Mittelwert der hyperspektralen Daten ermittelt.

In einer bevorzugten Ausführungsform der Erfindung werden farbmetrische Daten und/oder Farbdichtewerte aus jedem Mittelwert der hyperspektralen Daten ermittelt.

In der Farbmetrik werden zur Kennzeichnung einer Farbe drei Maßzahlen verwendet. Die Farbmetrik charakterisiert eine Farbe dabei durch Koordinatenangaben in einem vorgegebenen Farbraum. Häufig genutzte Farbräume sind beispielsweise der L*a*b*-Farbraum, der L*C*h*-Farbraum. Die Koordinaten der beiden Farbräume können jeweils durch einfache mathematische Transformationen ineinander überführt werden. Dieses Prinzip ist dem Fachmann gut bekannt. Die Verwendung der Farbmetrik bietet zahlreiche Vorteile, da sie eine objektive und verfahrensneutrale Möglichkeit zur Bewertung einer Farbe bietet. Weiterhin ist es mit der Farbmetrik möglich, auch sehr helle Farben bzw. Tonwerte mit einer großen Genauigkeit zu charakterisieren.

In einer bevorzugten Ausführungsform werden aus den Daten der hyperspektralen Flächenmessung die L*, a* und b*-Werte im sogenannten L*a*b*-Farbraum ermittelt als farbmetrische Daten ermittelt. Der L*a*b*-Farbraum ist ein Farbraum, der den Bereich der wahrnehmbaren Farben abdeckt. Der L*a*b*-Farbraum wird durch ein dreidimensionales Koordinatensystem beschrieben. Die L*-Achse beschreibt die Helligkeit (Luminanz) der Farbe mit Werten von 0 (Schwarz) bis 100 (Weiß). Die a*-Achse beschreibt den Grün- oder Rotanteil einer Farbe, wobei negative Werte für Grün und positive Werte für Rot stehen. Die b*-Achse beschreibt den Blau- oder Gelbanteil einer Farbe, wobei negative Werte für Blau und positive Werte für Gelb stehen. Die Skalen der a*-Achse und der b*-Achse umfassen einen Zahlenbereich von -150 bis +100 und -100 bis +150. Gemäß dem erfindungsgemäßen Verfahren wird dann für jeden Bereich eines Tonwertfeldes, für den eine Mittelung der hyperspektralen Daten stattgefunden hat, ein L*, a* und b* Wert berechnet,

In einer weiteren Ausführungsform werden aus den Daten der hyperspektralen Flächenmessung durch eine geeignete Software Farbdichtewerte ermittelt. Die Farbdichtewerte können üblicherweise für beliebige Filternormen berechnet werden. Geeignete Software ist dem Fachmann bekannt und ist im Allgemeinen in dem hyperspektralen Flächenmessgerät mit umfasst. Gemäß dem erfindungsgemäßen Verfahren wird dann für jeden Bereich eines Tonwertfeldes, für den eine Mittelung der hyperspektralen Daten stattgefunden hat ein Farbdichtewert berechnet. Werden in dem erfindungsgemäßen Verfahren Farbdichtewerte ermittelt, können diese vorteilhafterweise mit den Messergebnissen eines herkömmlichen Densitometers verglichen werden.

In einer weiteren Ausführungsform der vorliegenden Erfindung werden sowohl farbmetrische Daten, insbesondere L*a*b*-Werte, als auch Dichtewerte aus den hyperspektralen Daten für ein Tonwertfeld ermittelt.

Aus den hyperspektralen Daten des ausgegebenen Tonwerttargets wird ein digitales Referenzmuster erstellt. Dieses Referenzmuster enthält die farbmetrischen Daten, insbesondere die L*a*b*-Werte und/oder die Farbdichtewerte zugeordnet zu den Bereichen der Tonwertfelder, die für die Bildung der jeweils zu Grunde liegenden Mittelwerte der hyperspektralen Daten verwendet wurde. Über die Zuordnung zu den für die Mittelwertbildung genutzten Bereichen der Tonwertfelder ist, wie bereits beschrieben eine Zuordnung der einzelnen farbmetrischen Daten, insbesondere der L*a*b*-Werte, und/oder der Farbdichtewerte zu den Druckerköpfen des Druckers möglich.

In einer Ausführungsform der vorliegenden Erfindung wird ein digitales Referenzmuster, aufweisend die farbmetrischen Daten und/oder die Farbdichtewerte zugeordnet zu dem Bereich des Tonwertfeldes, der für die Bildung des mindestens einen Mittelwertes der hyperspektralen Daten verwendet wurde erstellt.

In einer bevorzugten Ausführungsform wird eine digitales Referenzmuster, aufweisend die farbmetrischen Daten und/oder die Farbdichtewerte zugeordnet zu den Bereichen der Tonwertfelder, die für die Bildung der Mittelwerte der hyperspektralen Daten verwendet wurden, erstellt.

Damit werden erfindungsgemäß farbmetrische Daten und/oder Farbdichtewerte zugeordnet zu mindestens einem Druckerkopf oder mehreren Druckerköpfen des digital Druckers für ein oder mehrere Tonwertfelder erstellt. In einer Ausführungsform der Erfindung werden für jeden Druckerkopf für jedes der 1 bis n Tonwertfelder eines Tonwerttargets farbmetrische Daten und/oder Farbdichtewerte erstellt.

Das erfindungsgemäße Verfahren hat damit insbesondere den Vorteil, dass nicht nur punktuell, wie mit den aus dem Stand der Technik bekannten Verfahren, die Tonwerte eines gedruckten Tonwerttargets erfasst werden, sondern eine flächige Messung vorgenommen wird. Von der hyperspektral vermessenen Fläche werden erfindungsgemäß aus den Messdaten Mittelwerte gebildet, die dann den Tonwert eines Bereichs des Tonwertfeldes repräsentiert. Ungenauigkeiten durch eine inhomogene Farbgebung des gedruckten Tonwertfeldes können dadurch vermieden werden. Hierdurch wird die Genauigkeit bei der Bestimmung des Tonwertes eines Bereichs des Tonwertfeldes wesentlich erhöht.

Vorteilhafterweise wird für die Vermessung des gedruckten Tonwerttargets nicht ein rein optisches System verwendet, sondern ein hyperspektrales Flächenmessgerät. Optische Messsysteme bieten durch die Parameter der verwendeten Chips und Sensoren nur eingeschränkte Möglichkeiten zur Erfassung der Tonwerte. Ein hyperspektrales Flächenmessgerät erfasst wesentlich mehr Messdaten und erhöht damit wiederum die Datenqualität für die weiteren Verfahrensschritte. Das rein optische System arbeitet wie bereits beschrieben ohne hyperspektrale Messung und damit mit Sensoren und Chips die für diese Art der Messung ausgelegt sind. Die für hyperspektrale Messung hingegen verwendeten Chips und Sensoren sind wiederum speziell für diese Messtechnik ausgelegt.

Gemäß dem erfindungsgemäßen Verfahren wird das digitale Tonwerttarget auf ein zweites Trägermaterial unter zweiten Druckbedingungen mit zweiten Druckerparametern durch den ersten digitalen Drucker oder einen zweiten digitalen Drucker ausgegeben.

Zumindest ein Teil des im vorangegangenen Verfahrensschritt g) ausgegebenen Tonwerttargets wird wiederum flächig hyperspektral vermessen. Besonders bevorzugt werden die gleichen Tonwertfelder und die gleichen Bereiche der Tonwertfelder hyperspektral vermessen, die auch im Verfahrensschritt c) vermessen wurden. Die hyperspektralen Daten werden wie bereits beschrieben ausgewertet, wobei bevorzugt für die Bildung der Mittelwerte die gleichen Bereiche der Tonwertfelder genutzt werden wie in Verfahrensschritt c).

Aus den Daten der hyperspektralen Flächenmessung werden, wie bereits beschrieben, farbmetrische Daten, insbesondere L*a*b*-Werte, und/oder Farbdichtewerte berechnet. Bevorzugt werden farbmetrische Daten, insbesondere L*a*b*-Werte, berechnet, wenn diese im digitalen Referenzmuster umfasst sind oder Farbdichtewerte berechnet, wenn diese im digitalen Referenzmuster umfasst sind oder farbmetrische Daten, insbesondere L*a*b*-Werte, und Farbdichtewerte berechnet, wenn beide im Referenzmuster umfasst sind. Aus den berechneten farbmetrischen Daten, insbesondere L*a*b*-Werte, und/oder Farbdichtewerte zugeordnet zu den Bereichen der Tonwertfelder, die für die Bildung der jeweils zu Grunde liegenden Mittelwerte der hyperspektralen Daten verwendet wurde, wird ein digitales Muster erstellt. Über die Zuordnung zu den für die Mittelwertbildung genutzten Bereichen der Tonwertfelder ist, wiederum eine Zuordnung der einzelnen farbmetrischen Daten, insbesondere der L*a*b*-Werte, und/oder der Farbdichtewerte zu den Druckerköpfen des Druckers möglich.

In einer bevorzugten Ausführungsform
- werden im Verfahrensschritt d) und i) Mittelwerte der hyperspektralen Daten zugeordnet zu verschiedenen Bereichen von Tonwertfeldern eines Tonwerttargets gebildet, wobei die verschiedenen Bereiche der Tonwertfelder eines Tonwerttargets jeweils von einem Druckerkopf im Druck abgedeckt werden;
- werden in Verfahrensschritt e) und j) farbmetrischen Daten und/oder Farbdichtewerten aus jedem Mittelwert der hyperspektralen Daten errechnet;
- wird in Verfahrensschritt f) ein digitales Referenzmuster erstellt, welches die farbmetrischen Daten und/oder die Farbdichtewerte zugeordnet zu den Bereichen der Tonwertfelder, die für die Bildung der Mittelwerte der hyperspektralen Daten verwendet wurden, aufweist; und
- wird in Verfahrensschritt k) ein digitales Muster erstellt, welches die farbmetrischen Daten und/oder die Farbdichtewerte zugeordnet zu den Bereichen der Tonwertfelder, die für die Bildung der Mittelwerte der hyperspektralen Daten verwendet wurden, aufweist.

Erfindungsgemäß werden das digitale Referenzmuster und das digitale Muster miteinander verglichen und mindestens ein Ähnlichkeitswert wird ermittelt. Der Vergleich kann automatisiert mittels Software oder manuell durch einen Nutzer durchgeführt werden. Eine geeignete Software für die automatisierte Durchführung des Vergleichs, wie beispielsweise die Software Colorgate der gleichnamigen Firma oder Software der Firma IPAC Improve Process Analytics and Control GmbH, ist dem Fachmann bekannt. Dabei werden jeweils die farbmetrischen Daten und/oder die Farbdichtewerte miteinander verglichen, die dem gleichen Bereich eines Tonwertfeldes und damit auch dem/den gleichen Druckerkopf/Druckerköpfen zugeordnet werden können. Das heißt es werden jeweils die Messdaten von zwei Tonwertefeldern oder von Bereichen innerhalb von zwei Tonwertfeldern mit identischer Position im Tonwerttarget miteinander verglichen.

In einer Ausführungsform der vorliegenden Erfindung werden bevorzugt die Messdaten auf mindestens 4 Nachkommastellen genau ermittelt und mit der entsprechenden Genauigkeit verglichen.

Sind in dem digitalen Referenzmuster und in dem digitalen Muster farbmetrische Daten umfasst, werden diese in einer Ausführungsform unmittelbar miteinander verglichen. Sind die farbmetrischen Daten L*a*b*-Werte, werden jeweils ein L* Wert des digitalen Referenzmuster und ein L*-Wert des digitalen Musters miteinander verglichen. Analog geschieht dies für die a*- und b*-Werte. Der Vergleich ergibt damit eine eventuelle Abweichung eines der farbmetrischen Werte, insbesondere eines der L*a*b*-Werte. Diese Abweichung stellt in dieser Ausführungsform den Ähnlichkeitswert dar und kann in absoluten Zahlen oder auch prozentual angegeben werden. Beide Werte können durch einfache mathematische Operationen ineinander überführt werden. Die Ergebnisse der Vergleiche stellen in dieser Ausführungsform jeweils den Ähnlichkeitswert für den der Mittelung der hyperspektralen Daten zu Grunde liegenden Bereich des Tonwertfeldes dar.

In einer weiteren Ausführungsform wird bei dem Vergleich der Farbabstand ΔE zwischen einem L*a*b*-Wert des digitalen Referenzmusters und einem L*a*b*-Wert des digitalen Musters als Ähnlichkeitswert berechnet. Der Farbabstand ist definiert als der euklidische Abstand der Farbkoordinaten. Der Farbabstand ΔE wird als absolute Zahl angegeben und optisch durch einen Betrachter im Allgemeinen wie folgt beurteilt wird:

| ΔE | optische Beurteilung |
|---|---|
| 0,0 - 0,5 | nahezu unmerklich |
| 0,5 - 1,0 | für das geübte Auge bemerkbar |
| 1,0 - 2,0 | geringer Farbunterschied |
| 2,0 - 4,0 | wahrgenommener Farbunterschied |
| 4,0 - 5,0 | wesentlicher, selten tolerierter Farbunterschied |
| oberhalb 5,0 | die Differenz wird als andere Farbe bewertet |

In dieser Ausführungsform stellen die berechneten Farbabstände jeweils den Ähnlichkeitswert für den der Mittelung der hyperspektralen Daten zu Grunde liegenden Bereichs des Tonwertfeldes dar

Sind in dem digitalen Referenzmuster und in dem digitalen Muster Farbdichtewerte umfasst, werden diese in einer Ausführungsform unmittelbar miteinander verglichen. Der Vergleich ergibt damit eine eventuelle Abweichung eines der Farbdichtewerte des digitalen Musters von einem Farbdichtewert des digitalen Referenzmusters. Diese Abweichung kann in absoluten Zahlen oder auch prozentual angegeben werden. Beide Werte können durch einfache mathematische Operationen ineinander überführt werden. Die Ergebnisse der Vergleiche stellen in dieser Ausführungsform jeweils den Ähnlichkeitswert für den der Mittelung der hyperspektralen Daten zu Grunde liegenden Bereich des Tonwertfeldes dar.

In einer weiteren Ausführungsform können bei dem Vergleich des digitalen Referenzmuster mit dem digitalen Muster auch Ähnlichkeitsindizes ausgegeben werden. Ganz allgemein repräsentiert der Ähnlichkeitsindex die Abweichung zwischen zwei Messwerten. Je größer der Ähnlichkeitsindex ist, desto weniger weichen die Messwerte, die miteinander verglichen werden, voneinander ab. Der Ähnlichkeitsvergleich wird durch eine Software auf einer Recheneinheit durchgeführt. Wird das ACMS^{®} Verfahren für die hyperspektrale Flächenmessung verwendet, kann der Ähnlichkeitsvergleich vorteilhafterweise über den Ähnlichkeitsindex der zugehörigen Software erfolgen. Diese Anwendung ist dem Fachmann bekannt.

Je größer die Ähnlichkeitsindizes sind, desto weniger weichen das digitale Referenzmuster und das digitale Muster, bzw. die miteinander verglichenen Daten des digitalen Referenzmusters und des digitalen Musters voneinander ab und desto farbgetreuer ist demnach das digitale Muster zum digitalen Referenzmuster und umgekehrt. Auch bei der Berechnung der Ähnlichkeitsindizes werden die farbmetrischen Daten, insbesondere die L*a*b*-Werte und/oder die Farbdichtewerte miteinander verglichen. Ein Ähnlichkeitsindex von 100% bedeutet, dass es keine Abweichungen zwischen einem L*a*b* Wert des digitalen Referenzmusters und des digitalen Musters gibt und beide identisch zueinander sind. Die im Verfahrensschritt g) ausgegebenen Tonwertfelder des Tonwerttargets können aus unterschiedlichen Gründen hinsichtlich ihres auf das Trägermaterial gedruckten Tonwertes sowohl einen höheren als auch einen niedrigeren Tonwert aufweisen im Vergleich zu den im Verfahrensschritt b) gedruckten Tonwertfeldern des Tonwerttargets. Sowohl höhere als auch niedrigere Tonwerte spiegeln sich bei der Ermittlung des Ähnlichkeitsindex in einem Ähnlichkeitsindex wider, der unter 100% liegt. In dieser Ausführungsform stellt der mindestens eine Ähnlichkeitsindex den mindestens einen Ähnlichkeitswert dar.

Erfindungsgemäß kann der mindestens eine Ähnlichkeitswert daher als Abweichung zwischen farbmetrischen Daten, insbesondere L*a*b*-Werten und/oder als Abweichungen zwischen Farbdichtewerten und/oder als Farbabstand ΔE und/oder als Ähnlichkeitsindex vorliegen.

In einer weiteren Ausführungsform kann der Vergleich auch manuell durch einen Nutzer durchgeführt werden und wird dabei basierend auf der Erfahrung des Nutzers durchgeführt. Der Nutzer kann dann auf Grundlage des Vergleichsergebnisses weitere Maßnahmen initiieren.

Verfahrensgemäß wird mindestens ein Druckerparameter oder eine Kombination mehrerer Druckerparameter des ersten oder zweiten digitalen Druckers angepasst, wenn der mindestens eine Ähnlichkeitswert außerhalb mindestens eines vorgegebenen Toleranzbereichs liegt.

Der Toleranzbereich wird in Abhängigkeit des Qualitätsanspruches an den jeweiligen Druckprozess und der darin enthaltenen Farben festgelegt und ist damit flexibel an die jeweiligen Bedürfnisse anpassbar. So können auch individuelle Ansprüche eines Kunden an die Druckqualität eines Druckauftrages berücksichtigt werden. In einer Ausführungsform wird ein Toleranzbereich für alle Tonwertfelder vorgegeben. In einer weiteren Ausführungsform werden verschiedene Toleranzbereiche für verschiedenen Tonwertfelder vorgegeben. Durch letztere Ausführungsform kann der Tatsache Rechnung getragen werden, dass von einem Betrachter Unterschiede in der Farbgebung nicht für jede Tonwertstufe mit der gleichen Empfindlichkeit wahrgenommen werden.

In einer Ausführungsform der vorliegenden Erfindung wird der mindesten eine Toleranzbereich in Abhängigkeit des Dekors und der darin enthaltenen Farben festgelegt. Ebenso kann der Anspruch eines Kunden an die farbgetreue Wiedergabe eines Dekors durch die Wahl des Toleranzbereichs berücksichtigt werden.

Liegt der mindestens eine Ähnlichkeitswert als Abweichung zwischen farbmetrischen Daten, insbesondere L*a*b*-Werten und/oder als Abweichungen zwischen Farbdichtewerten vor, wird der Toleranzbereich bevorzugt in % angeben. Erfindungsgemäß beträgt der Toleranzbereich dabei zwischen 0% und ± 5%, bevorzugt zwischen 0% und ± 3%, besonders bevorzugt zwischen 0% und ± 0,5%. Da eine Abweichung der Farbdichtewerte und/oder der farbmetrischen Daten sowohl in positiver als auch in negativer Richtung vorliegen kann, ist der Toleranzbereich als ± Bereich angegeben.

Liegt der mindestens eine Ähnlichkeitswert als Farbabstand ΔE vor, so wird der Toleranzbereich in absoluten Zahlen angegeben. In einer Ausführungsform beträgt der Toleranzbereich dabei zwischen 0,0 und 1, bevorzugt zwischen 0,0 und 0,5 besonders bevorzugt zwischen 0,0 und 0,1.

Liegt der mindestens eine Ähnlichkeitswert als Ähnlichkeitsindex vor, so wird der Toleranzbereich bevorzugt in % angegeben. In einer Ausführungsform beträgt der Toleranzbereich dabei zwischen 75% und 100%, bevorzugt zwischen 95% und 100%, besonders bevorzugt zwischen 99,5 % und 100%.

Das Anpassen des mindestens einen Druckerparameters oder einer Kombination mehrerer Druckerparameter des ersten oder zweiten digitalen Druckers kann dabei erfindungsgemäß automatisch oder manuell erfolgen.

Bevorzugt sind die Druckerparameter, die angepasst werden, ausgewählt aus der Gruppe aufweisend Separationsdaten, elektrische Spannung im Druckerkopf, Temperatur und der Softwaresteuerung des Druckers. Besonders bevorzugt werden die Druckerparameter Separationsdaten und/oder elektrische Spannung im Druckerkopf angepasst.

Soll ein Dekor gedruckt werden, so wird zu Beginn des Druckprozesses eine Separationsdatei erstellt, in der das Dekor in die zu druckenden Grundfarben zerlegt ist. Die Separationsdaten werden dabei für das im Druck verwendete Farbsystem, wie zum Beispiel für das CMYK Farbsystem aus der Druckdatei des Dekors generiert. Dabei werden mittels Software ausgehend von einer Druckdatei, enthaltend ein mehrfarbiges Dekor oder ein Dekor in Graustufen, für jeden Farbbestandteil des Farbsystems Druckdaten erstellt, die dann wiederum den Druckköpfen zugeordnet werden. Die Druckdaten für jeden Farbbestandteil des verwendeten Farbsystems für ein Dekor werden Separationsdaten genannt.

Die Separationsdaten enthalten demnach die Information, in welcher Abfolge welche Tonwerte eines Farbbestandteils zu drucken sind. Die Tonwerte können dabei höchstens so exakt gedruckt werden, wie es die Auflösung des Druckerkopfes, also die Anzahl der Düsen in der Breite, technisch zulässt. In einigen Druckerköpfen ist eine Auflösung bis auf wenige Bildpunkte genau möglich. Die Auflösung wird weiterhin durch die Separationsdaten bestimmt. Durch die Separationsdaten kann daher auch eine geringere Auflösung beim Druck eines Tonwertes eines Farbbestandteils vorgegeben werden. Dadurch kann durch die Anpassung der Separationsdaten der Tonwert eines Tonwertfeldes beim Druck des Tonwerttargets beeinflusst werden. Die Separationsdaten bieten damit eine Möglichkeit, den Tonwert eines Tonwertfeldes eines Farbbestandteils bis auf wenige Bildpunkte genau einzustellen. Dies wirkt sich auch auf die Druckqualität im späteren Druck eines Dekors aus.

Vorteilhafterweise ist es möglich durch eine geeignete Software einen Softwarefilter auf die Separationsdaten zu legen. In dieser Ausführungsform wird die Softwaresteuerung des Druckers beeinflusst und ist damit der Druckerparameter. Hierdurch werden nicht die Separationsdaten direkt geändert, sondern es wird lediglich der passende Softwarefilter berechnet. Dieser beeinflusst dann den Tonwert, der gedruckt wird. Zum Beispiel kann die Cyan-Tonwertstufe für ausgewählte Druckerköpfe mittels des Softwarefilters von 10% auf 8% gesenkt werden. Die Cyantonwerte werden dann mit diesen Druckerköpfen mit einem um 2% niedrigeren Tonwert gedruckt als in den Separationsdaten vorgegeben. Diese Ausführungsform hat den Vorteil, dass die Separationsdaten nicht komplett neu berechnet werden müssen und die Berechnung des Softwarefilters mit einer hohen Geschwindigkeit durchgeführt werde kann.

In einer weiteren Ausführungsform der Erfindung können auch die Separationen an sich durch eine Software neu berechnet werden, was jedoch einen höheren Datenaufwand mit sich bringt.

In einer weiteren Ausführungsform wird die elektrische Spannung am Druckkopf gesteuert. Durch Verringerung oder Erhöhung dieser ändert sich das Druckverhalten im Bereich der Dichte des Farbauftrages beim Druck und damit der Tonwert der gedruckten Farben. Aus dem Stand der Technik sind dabei Druckköpfe bekannt, bei denen sich die elektrische Spannung nur im Ganzen, das heißt global für den gesamten Druckkopf einstellen lässt (z.B. Fuji Samba mit einer Druckkopfbreite von 43mm). Weiterhin bekannt sind auch Druckköpfe, die in mehrere Bereiche unterteilt sind und deren elektrische Spannung einzeln ansteuerbar ist. Möglich ist auch die Steuerung der elektrischen Spannung einzelner Düsen eines Druckkopfes. Ein Beispiel hierfür sind einige Druckköpfe der Firma Kyocera. Diese sind in 4 Units unterteilt, die je eine Druckbreite von ca. 2,5 cm aufweisen und die sich bezüglich der elektrischen Spannung einzeln ansteuern lassen. Durch die elektrische Spannung an einem Druckkopf kann damit gesteuert werden, mit welcher Intensität eine einzelne Düse eines Druckkopfes, eines Bereiches eines Druckkopfes oder der ganze Druckkopf ein Druckmedium druckt.

Ein weiterer Druckerparameter ist beispielsweise die Temperatur des Druckers, die angepasst werden kann, um einen Tonwert beim Druck zu ändern. Bei niedrigen Temperaturen ist die Farbe schwächer bzw. blasser, da die Farbe beim Auftrag nicht richtig trocknet und dadurch in das Trägermaterial absackt. Ist die Temperatur zu hoch tritt genau der umgekehrte Fall ein und die Farbe ist zu intensiv.

In einer weiteren Ausführungsform der vorliegenden Erfindung ist es auch möglich, dass eine Kombination von mehreren Druckerparametern angepasst wird. In einer bevorzugten Ausführungsform der vorliegenden Erfindung werden sowohl die Separationsdaten angepasst als auch die elektrische Spannung am Druckkopf gesteuert. Dabei kann die Änderung der Separationsdaten mittels Software dazu genutzt werden, die Tonwerte sehr gleichmäßig anzupassen. Dies kann bis auf wenige Bildpunkte genau im Druck erfolgen. Parallel kann durch die Steuerung der elektrischen Spannung am Druckkopf eine gröbere Einstellung vorgenommen werden bzw. die Dichte des Farbauftrages beim Druck für den gesamten ansteuerbaren Bereich des Druckkopfs verändert werden.

Die Steuerung der elektrischen Spannung des Druckkopfs ist besonders vorteilhaft, wenn zuvor die Tonwerte der einzelnen Tonwertfelder in einer gewünschten Abstufung zueinander eingestellt wurden, zum Beispiel durch eine Anpassung der Separationsdaten. Das heißt, benachbarte Tonwertfelder eines Farbbestandteils unterscheiden sich in ihrem Tonwert jeweils um beispielsweise 2,5%. Durch die Steuerung der elektrischen Spannung des Druckerkopfs kann dann die Dichte des Farbauftrages beim Druck vorteilhafterweise für alle Tonwertfelder des Tonwerttargets auf einmal um einen definierten Betrag erhöht oder gesenkt werden, wobei die Tonwerte der Tonwertfelder ebenso um einen definierten Betrag erhöht oder gesenkt werden. Dies kann vor allem bei der Korrektur von Farbdrift während eines Druckprozesses vorteilhaft eingesetzt werden.

Da sich mit dem erfindungsgemäßen Verfahren Tonwertstufen angleichen und verändern lassen, können auch andere Einflüsse beim Druckprozess wie z.B. Schwankungen in der Tintencharge oder in den Trägermaterialien ausgeglichen werden.

In einer Ausführungsform der vorliegenden Erfindung kann ein Teil des unbedruckten Trägermaterials hyperspektral vermessen werden, den Messwerten des unbedruckten Trägermaterials wird dann die Tonwertstufe 0% zugeordnet. Im Vergleich zu den hyperspektral vermessenen Tonwertfeldern des Tonwerttargets kann dann mit einer geeigneten Software der Einfluss der Farbgebung des Trägermaterials auf die Messergebnisse der hyperspektralen Vermessung der Tonwertfelder des Tonwerttargets herausgerechnet werden. Die so erhaltenen absoluten Dichtewerte können beispielsweise vorteilhafterweise mit Messwerten einer Messung mit einem Densitometer verglichen werden. In einer Ausführungsform der vorliegenden Erfindung wird daher auch ein Teil des unbedruckten Trägermaterials hyperspektral vermessen.

In einer Ausführungsform der vorliegenden Erfindung kann weiterhin mindestens ein Signal ausgegeben werden, wenn der mindestens eine Ähnlichkeitswert außerhalb eines vorgegebenen Toleranzbereichs liegt. Das mindestens eine Signal kann entweder automatisiert oder von einem Nutzer initiiert ausgegeben werden. Ein geeignetes Signal kann ein optisches oder auch ein akustisches Signal sein. Dies kann beispielsweise eine akustische Signalausgabe, wie beispielsweise ein Warnton oder Alarmton sein und/oder auch ein optisches Signal auf einer Anzeige. In einer weiteren Ausführungsform der vorliegenden Erfindung ist mit der Ausgabe des Signals auch eine Unterbrechung des Druckprozesses verbunden. Das Signal kann ein Hinweis auf eine unerwünscht große Abweichung des digitalen Musters vom digitalen Referenzmuster verdeutlichen.

In einer weiteren Ausführungsform erfolgt ein Signal in Form eines Hinweises für vorzunehmende Änderungen der Druckerparameter in einem nachfolgenden Druckprozess. Dieser Hinweis kann beispielsweise auf einem Bildschirm angezeigt werden.

In einer Ausführungsform der vorliegenden Erfindung sind die ersten Druckbedingungen und die zweiten Druckbedingungen sowie das erste und das zweite Trägermaterial im erfindungsgemäßen Verfahren gleich. Durch diese Ausführungsform ist es möglich, eine Qualitätsüberprüfung in einem zeitlich andauernden Druckprozess vorzunehmen. Dabei werden die Verfahrensschritte g) bis m) zeitlich beabstandet von den Verfahrensschritten a) bis f) durchgeführt. Die Ausgabe des Tonwerttargets auf das zweite Trägermaterial erfolgt dabei durch den ersten Drucker, mit dem auch das Tonwerttarget auf das erste Trägermaterial ausgegeben wurde. Durch diese Ausführungsform ist es möglich, eine Qualitätsüberprüfung eines Druckers über eine vorgegebene Zeitspanne durchzuführen. Änderungen in der Druckqualität werden unmittelbar beim Vergleich des digitalen Musters mit dem digitalen Referenzmuster erkannt. Sollte der mindestens eine Ähnlichkeitswert außerhalb eines vorgegebenen Toleranzbereichs liegen, kann dieser durch eine Anpassung eines Druckerparameters oder einer Kombination von Druckerparametern entgegengewirkt werden.

In einer Ausführungsform der vorliegenden Erfindung werden die Verfahrensschritte g) bis m) so oft durchlaufen, bis der mindestens eine Ähnlichkeitswert innerhalb des vorgegebenen Toleranzbereichs liegt. Durch diese Ausführungsform ist eine Überprüfung der vorgenommenen Anpassungen in einem Druckerparameter oder in einer Kombination von Druckerparametern und deren Auswirkungen möglich.

In einer weiteren Ausführungsform der vorliegenden Erfindung werden die Verfahrensschritte g) bis m) nach einer vorgegebenen Zeit wiederholt. In dieser Ausführungsform ist es möglich, in vorgegebenen zeitlichen Abständen immer wieder eine Überprüfung der Druckqualität vorzunehmen. Beispielsweise kann so die Druckqualität eines Druckers stündlich oder täglich überwacht werden. Änderungen in der Druckqualität werden unmittelbar beim Vergleich des digitalen Musters mit dem digitalen Referenzmuster erkannt. Sollte der mindestens eine Ähnlichkeitswert außerhalb des vorgegebenen Toleranzbereichs liegen, kann durch eine Anpassung eines Druckerparameters oder einer Kombination von Druckerparametern entgegengewirkt werden.

In einer Ausführungsform der vorliegenden Erfindung wird auf das zweite Trägermaterial neben dem Tonwerttarget ein Dekor aufgedruckt, wobei das Dekor mit dem gleichen digitalen Drucker auf das zweite Trägermaterial gedruckt wird wie das Tonwerttarget.

In dieser Ausführungsform wird das Tonwerttarget beim Dekordruck auf ein Trägermaterial aufgedruckt. Hierfür kann das Tonwerttarget beispielsweise in einem oder auch in beiden Randbereichen beim Dekordruck auf das Trägermaterial aufgedruckt werden. Wird dies in zeitlichen Abständen oder auch ständig durchgeführt, kann eine Abweichung der Tonwerte der Tonwertfelder sofort ermittelt werden und es können entsprechende Anpassungen vorgenommen werden. Auch wenn hierbei nur Druckköpfe im Randbereich des Trägermaterials überwacht werden können, kann auf diese Weise ein auftretender Farbdrift im Druckprozess zügig detektiert werden. Diese Ausführungsform dient damit der fortlaufenden Qualitätskontrolle in einem Druckprozess.

In einer Ausführungsform der vorliegenden Erfindung wird nach dem Anpassen mindestens eines Druckerparameters oder einer Kombination mehrerer Druckerparameter ein Dekor auf das zweite Trägermaterial gedruckt, wobei das Dekor mit dem gleichen digitalen Drucker auf das zweite Trägermaterial gedruckt wird wie das Tonwerttarget.

Durch das Anpassen der Druckerparameter ist sichergestellt, dass ein Dekordruck mit dem verwendeten digitalen Drucker in der gewünschten Qualität erfolgen kann. Daher kann im Anschluss an die Anpassung eines Druckparameters oder einer Kombination von Druckerparametern unmittelbar ein Dekordruck mit der gewünschten Druckqualität auf das Trägermaterial aufgebracht werden.

In einer weiteren Ausführungsform der vorliegenden Erfindung wird das Tonwerttarget mit einem ersten digitalen Drucker auf ein erstes Trägermaterial gedruckt und mit einem zweiten digitalen Drucker auf ein zweites Trägermaterial. Bevorzugt werden dann die Druckerparameter des zweiten digitalen Druckers derart angepasst, dass der mindestens eine Ähnlichkeitswert innerhalb eines vorgegebenen Toleranzbereichs liegt. Hierdurch ist es möglich, dass die Druckqualität des zweiten digitalen Druckers an den ersten digitalen Drucker angepasst wird. Die vom zweiten digitalen Drucker beim Drucken des Tonwerttargets ausgegebenen Tonwerte werden damit auf die vom ersten digitalen Drucker beim Drucken des Tonwerttargets ausgegebenen Tonwerte kalibriert. Der erste und der zweite digitale Drucker können damit nachfolgend mit der gleichen Qualität Dekore auf die bei der Kalibrierung genutzte Art von Trägermaterial drucken, wobei die Druckbedingungen ebenfalls konstant sein müssen. Diese Kalibrierung kann im Laufe des Druckprozesses immer wieder wiederholt werden, womit gleichzeitig eine Qualitätskontrolle vollzogen wird.

Das erfindungsgemäße Verfahren kann sowohl inline als auch offline in einen Druckprozess integriert werden.

In einer weiteren Ausführungsform des Verfahrens umfasst das Verfahren weiterhin die Schritte:
n) Optional Erstellen und Ausgabe eines weiteren Tonwerttargets auf ein Trägermaterial mit einem ersten oder zweiten digitalen Drucker, wobei jedes Tonwertfeld des Tonwerttargets über die gesamte Breite des Trägermaterials ausgegeben wird;
o) Aufnahme mindestens eines Bildes des im Verfahrensschritt g) oder im Verfahrensschritt n) ausgegebenen Tonwerttargets mit einem optischen Kamerasystem;
p) Berechnen der L*-Werte für jeden Bereich eines Tonwertfeldes aus dem mindestens einen Bild, der einem Druckerkopf zugeordnet werden kann;
q) Berechnen von Kalibrierfaktoren mit den L*-Werten aus dem mindestens einen Bild und den L*-Werten des digitalen Referenzmusters;
r) Vergleich der Kalibrierfaktoren und berechnen von mindestens einem Ähnlichkeitswert; und
s) Anpassen mindestens eines Druckerparameters oder einer Kombination mehrerer Druckerparameter des ersten oder zweiten digitalen Druckers, wenn der mindestens eine Ähnlichkeitswert außerhalb mindestens eines vorgegebenen Toleranzbereichs liegt.

In einer Ausführungsform wird optional ein weiteres Tonwerttarget erstellt und auf ein Trägermaterial mit einem ersten oder zweiten digitalen Drucker ausgegeben. Das Tonwerttarget umfasst dabei Tonwertfelder, die über die gesamte Breite des Trägermaterials reichen. Verschiedene Tonwerte eines Farbbestandteils sind dabei in Drucklänge hintereinander angeordnet. Das weitere Tonwerttarget weist die gleichen Tonwerte der Farbbestandteile auf, wie das Tonwerttarget, welches im Verfahrensschritt a) erstellt wurde. Die Druckerparameter, Druckbedingungen und das verwendete Trägermaterials sind dabei die gleichen wie in den Verfahrensschritten b) und g).

Umfasst das Tonwerttarget, welches im Verfahrensschritt a) erstellt wurde, bereits Tonwertfelder, die auf der gesamten Breite des Trägermaterials gedruckt werden, so entfällt der Schritt der Ausgabe eines weiteren Tonwerttargets auf ein Trägermaterial mit einem ersten oder zweiten digitalen Drucker, wobei jedes Tonwertfeld des Tonwerttargets über die gesamte Breite des Trägermaterials ausgegeben wird.

In dieser Ausführungsform wird mindestens ein Bild des in Verfahrensschritt g) oder in Verfahrensschritt n) ausgegebenen Tonwerttargets mit einem optischen Kamerasystem aufgenommen.

Das optische Kamerasystem kann dabei eine oder auch mehrere Einzelkameras umfassen. Werden mehrere Einzelkameras verwendet, werden bevorzugt deren einzelne Bilder zu einem Gesamtbild durch eine geeignete Software zusammengesetzt. Das Gesamtbild kann damit das Bild einer Kamera oder auch die zusammengesetzten Einzelbilder mehrerer Einzelkameras umfassen. Das mindestens eine Bild oder das Gesamtbild bildet dabei bevorzugt alle Tonwertfelder des Tonwerttargets ab, die ausgegeben wurden. In einer weiteren Ausführungsform bildet das mindestens eine Bild oder das Gesamtbild nur einen Teil der Tonwertfelder des Tonwerttargets ab, die ausgegeben wurden.

Besonders bevorzugt weist jedes Tonwertfeld des Tonwerttargets oder des weiteren Tonwerttargets in dieser Ausführungsform die gesamte Breite des Trägermaterials auf. Verschiedene Tonwertfelder sind dann in Drucklänge gesehen hintereinander angeordnet. Erfindungsgemäß können daher für ein Tonwertfeld mehrerer Bereiche des Tonwertfeldes ausgewertet werden. Bevorzugt grenzen die einzelnen Bereiche aneinander an, überlappen sich jedoch nicht. Besonders bevorzugt entspricht die Größe jedes Bereichs dem Bereich, der von einem Druckerkopf im Druck abgedeckt wird. In dieser Ausführungsform können dann jedem Druckerkopf farbmetrische Daten des Tonwertfeldes zugeordnet werden. Damit ist es möglich, die Druckqualität jedes Druckerkopfes im verwendeten Drucker zu überprüfen. Die farbmetrischen Daten sollten im idealen Fall für jeden Bereich eines Tonwertfeldes identisch sein.

In dieser Ausführungsform werden aus dem Gesamtbild für jeden Bereich eines Tonwertfeldes, der einem Druckerkopf zugeordnet werden kann, L*-Werte aus dem mindestens einen Bild berechnet. Software, die geeignet ist, L*-Werte aus einem Bild, welches mit einer optischen Kamera aufgenommen wurde, zu berechnen, ist aus dem Stand der Technik bekannt.

Aus den L*-Werten aus dem mindestens einen Bild und den L*-Werten des digitalen Referenzmusters werden dann Kalibrierfaktoren berechnet, indem die L*-Werte von gleichen Druckkopfbereichen ins Verhältnis gesetzt werden. Anschließend werden jeweils zwei Kalibrierfaktoren miteinander verglichen und aus deren Abweichung ein Ähnlichkeitswert berechnet. Für die Berechnung des Ähnlichkeitswertes muss ein Kalibrierfaktor als Referenz dienen, der als korrekt angenommen wird. Hierfür wird der Kalibrierfaktor verwendet, der für die L*-Werte der bereits in den Verfahrensschritten a) bis m) angepassten Druckerköpfe berechnet wird. Alle weiteren Kalibrierfaktoren innerhalb eines Tonwertfeldes werden jeweils mit diesem Kalibrierfaktor verglichen und es wird ein Ähnlichkeitswert ermittelt. Der Ähnlichkeitswert wird dabei bevorzugt in % angegeben. Liegt der Ähnlichkeitswert außerhalb eines vorgegebenen Toleranzbereiches, wird mindestens ein Druckerparameter oder eine Kombination von Druckerparametern angepasst.

Erfindungsgemäß wird der Toleranzbereich in dieser Ausführungsform bevorzugt in % angeben. Erfindungsgemäß beträgt der Toleranzbereich dabei zwischen 0% und ± 5%, bevorzugt zwischen 0% und ± 3%, besonders bevorzugt zwischen 0% und ± 0,5%. Da eine Abweichung sowohl in positiver als auch in negativer Richtung vorliegen kann, ist der Toleranzbereich als ± Bereich angegeben.

Vorteilhafterweise können in dieser Ausführungsform die exakten Messwerte der L*-Werte der hyperspektralen Flächenmessung zur Kalibrierung von L*-Werten von Bereichen von Tonwertfeldern dienen, die ausschließlich mit dem optischen Kamerasystem aufgenommen wurden. In einer Ausführungsform wird im Verfahrensschritt a) ein Tonwerttarget erstellt, welches Tonwertfelder aufweist, die nicht über die gesamte Breite eines Trägermaterials gedruckt werden, sondern nur in einem Randbereich des Trägermaterials. Damit wird das Tonwerttarget nur von einem Teil der Druckerköpfe gedruckt. Aus diesem Tonwerttarget können aus der hyperspektralen Flächenmessung sehr exakte L*-Werte ermittelt und ein digitales Referenzmuster erstellt werden. Durch wiederholtes Drucken des Tonwerttargets aus Verfahrensschritt a) und hyperspektrales Vermessen kann ein digitales Muster erstellt werden, welches ebenfalls L*-Werte umfasst. Durch das Berechnen der Ähnlichkeitswerte kann ermittelt werden, ob eine Anpassung von einem Druckerparameter oder einer Kombination von Druckerparametern notwendig ist. Diese Druckerköpfe sind damit angepasst.

In dieser Ausführungsform wird ein weiteres Tonwerttarget erstellt, welches die gleichen Tonwerte aufweist, wie das Tonwerttarget aus Verfahrensschritt a). Die Tonwertfelder weisen nun jedoch eine Breite auf, die über die gesamte Breite des Trägermaterials reicht. Das weitere Tonwerttarget wird auf ein Trägermaterial gedruckt und es wird mindestens ein Bild mit einem optischen Kamerasystem aufgenommen. Das mindestens eine Bild oder ein Gesamtbild bilden bevorzugt das gesamte weitere Tonwerttarget ab.

Ein Teil des weiteren Tonwerttargets wurde dabei von den Druckerköpfen gedruckt, die bereits durch die Verfahrensschritte a) bis m) angepasst wurden.

Weiterhin wird in dieser Ausführungsform aus dem mindestens einen Bild oder dem Gesamtbild für jeden Bereich eines Tonwertfeldes, der einem Druckerkopf zugeordnet werden kann, ein L*-Wert durch eine geeignete Software berechnet. Aus den L*-Werten des digitalen Referenzmusters und den L*-Werten des mindestens einen Bildes können nun Kalibrierfaktoren berechnet werden. Die Kalibrierfaktoren werden jeweils für die einzelnen Bereiche des Tonwertfeldes berechnet, die einem Druckerkopf zugeordnet werden können. Für die Berechnung des Ähnlichkeitswertes muss ein Kalibrierfaktor als Referenz dienen, der als korrekt angenommen wird. Hierfür wird der Kalibrierfaktor verwendet, der für die L*-Werte der bereits in den Verfahrensschritten a) bis m) angepassten Druckerköpfe berechnet wird. Alle weiteren Kalibrierfaktoren innerhalb eines Tonwertfeldes werden jeweils mit diesem Kalibrierfaktor verglichen und es wird ein Ähnlichkeitswert ermittelt. Liegt der Ähnlichkeitswert außerhalb eines vorgegebenen Toleranzbereiches, wird mindestens ein Druckerparameter oder eine Kombination von Druckerparametern angepasst.

Diese Ausführungsform verbindet damit die Vorteile der hyperspektralen Flächenmessung mit einem optischen Kamerasystem. Über den gesamten Bereich des Trägermaterials kann dann eine Anpassung der Druckerparameter vorgenommen werden, wobei die hyperspektralen Daten zur Kalibrierung für die Daten des optischen Kamerasystems dienen.

In einer weiteren Ausführungsform der vorliegenden Erfindung ist das Tonwerttarget aus Verfahrensschritt a) ein Tonwerttarget, welches Tonwertfelder aufweist, die über die gesamte Breite des Trägermaterials reichen. Verschieden Tonwerte eines Farbbestandteils sind dann in Drucklänge hintereinander angeordnet. In dieser Ausführungsform wird das Tonwerttarget auf das Trägermaterial aufgebracht und im Randbereich hyperspektral flächig vermessen. Aus der hyperspektralen Messung wird ein digitales Referenzmuster erstellt, welches L*-Werte aufweist. Das Tonwerttarget wird erneut auf ein Trägermaterial aufgebracht und es wird wiederum der gleiche Bereich hyperspektral vermessen. Aus diesen Messwerten wird ein digitales Muster erstellt, welches ebenfalls L*-Werte aufweist. Durch das Berechnen der Ähnlichkeitswerte kann nun ermittelt werden, wann eine Anpassung von einem Druckerparameter oder einer Kombination von Druckerparametern notwendig ist. Die Druckerköpfe, die für den Druck der Bereiche der Tonwertfelder verwendet wurden, die anschließend hyperspektral vermessen wurden, sind damit angepasst.

Anschließend wird in dieser Ausführungsform mindestens ein Bild mit einem optischen Kamerasystem von dem Tonwerttarget aufgenommen, welches im Verfahrensschritt g) gedruckt wurde. Das mindestens eine Bild oder ein Gesamtbild bilden das gesamte Tonwerttarget ab.

Weiterhin wird aus dem mindestens einen Bild oder dem Gesamtbild für jeden Bereich eines Tonwertfeldes, der einem Druckerkopf zugeordnet werden kann, ein L*-Wert durch eine geeignete Software berechnet. Aus den L*-Werten des digitalen Referenzmusters und den L*-Werten des mindestens einen Bildes können nun Kalibrierfaktoren berechnet werden. Die Kalibrierfaktoren werden jeweils für die einzelnen Bereiche des Tonwertfeldes berechnet, die einem Druckerkopf zugeordnet werden können. Für die Berechnung des Ähnlichkeitswertes muss ein Kalibrierfaktor als Referenz dienen, der als korrekt angenommen wird. Hierfür wird der Kalibrierfaktor verwendet, der für die L*-Werte der bereits in den Verfahrensschritten a) bis m) angepassten Druckerköpfe berechnet wird. Alle weiteren Kalibrierfaktoren innerhalb eines Tonwertfeldes werden jeweils mit diesem Kalibrierfaktor verglichen und es wird ein Ähnlichkeitswert ermittelt. Liegt der Ähnlichkeitswert außerhalb eines vorgegebenen Toleranzbereiches, wird mindestens ein Druckerparameter oder eine Kombination von Druckerparametern angepasst. Somit können alle Druckerköpfe angepasst werden, obwohl nicht das gesamte Tonwerttarget hyperspektral vermessen wurde.

Durch das erfindungsgemäße Verfahren ergeben sich zahlreiche Vorteile gegenüber dem Stand der Technik:
- Die zeitaufwendige Dichte-Punktmessung, die von Hand ausgeführt wird, entfällt vollständig.
- Ungenauigkeiten bei der Vermessung der Tonwerte des ausgegebenen Tonwerttargets werden minimiert, da eine flächige hyperspektrale Vermessung stattfindet, bei der aus den gemessenen Daten Mittelwerte gebildet werden. Damit werden Inhomogenitäten der Farbgebung der Tonwertfelder ausgeglichen (fehlerhafte helle oder dunkle Punkte).
- Es wird ein hyperspektrales Messsystem verwendet anstatt einer rein optischen Messung, die lediglich auf der Verwendung von Chips und Sensoren basiert. Die rein optische Messung umfasst keine hyperspektrale Messung und deren Chips und Sensoren sind entsprechend auch nicht auf eine hyperspektrale Messung ausgelegt bzw. für diese geeignet.

- Durch das erfindungsgemäße Verfahren wird ein automatisierter Kontroll- und Anpassungsprozess ermöglicht.
- Es werden nicht Farbprofile bzw. Farbräume angepasst und/oder korrigiert, das heißt Einfluss auf die Druckdatei des zu druckenden Dekors genommen, sondern die Druckerparameter. Bei der alleinigen Anpassung der Farbprofile bzw. Farbräume eines Druckdekors besteht die Gefahr, dass sich die gewünschte Druckqualität nicht mehr erreichen lässt. Dies tritt zum Beispiel ein, wenn Druckköpfe nicht mehr so intensiv drucken wie zum Zeitpunkt der ersten Profilierung. Dies kann **nicht** durch Colormanagement ausgeglichen werden, sondern nur durch eine Anpassung der Druckerparameter.
- Häufiges Colormanagement kann zur Folge haben, dass sich das Druckergebnis mit jeder Korrektur immer weiter vom eigentlichen Urzustand entfernt, was zu einer Einbuße der Druckqualität führt. Dies wird durch das erfindungsgemäße Verfahren vermieden.
- Weiterhin entfällt das häufige Colormanagement, mit dem zumeist ein hoher Zeitaufwand verbunden ist, da jedes Mal alle Druckdaten neu mit dem Farbprofil belegt und in eine Separationsdatei erstellt werden müssen. Dieser Zeitaufwand kann durch das erfindungsgemäße Verfahren eingespart werden. Hierdurch erhöht sich die Wirtschaftlichkeit eines Druckprozesses wesentlich.

Weiterhin umfasst die Erfindung eine Vorrichtung, insbesondere eine Druckanlage, die dazu eingerichtet ist das erfindungsgemäße Verfahren zur Anpassung der Druckerparameter eines digitalen Druckers durchzuführen, wobei die Vorrichtung
- Mindestens ein hyperspektrales Flächenmessgerät;
- Mindestens eine Recheneinheit;
- Mindestens einen ersten digitalen Drucker zum Drucken eines Tonwerttargets;
- Optional einen zweiten digitalen Drucker zum Drucken eines Tonwerttargets; und
- Optional mindestens ein Mittel zur Weiterverarbeitung eines auf ein Trägermaterial gedruckten Dekors;
umfasst.

In einer Ausführungsform umfasst die Vorrichtung ein hyperspektrales Flächenmessgerät. Geeignete Geräte sind bereits beschrieben worden. In einer weiteren Ausführungsform umfasst die Vorrichtung optional mindestens ein Mittel zur Weiterverarbeitung des auf ein Trägermaterial gedruckten Dekors. Ein solches Mittel zur Weiterverarbeitung ist vorzugsweise ausgewählt aus der Gruppe umfassend eine Vorrichtung zum Imprägnieren, eine Vorrichtung zum Verpressen des bedruckten Trägermaterials mit weiteren Schichten wie beispielsweise einer Imprägnierschicht, und einer Vorrichtung zur Profilierung des bedruckten Trägermaterials.

In einer besonders bevorzugten Ausführungsform ist das Mittel zum Verpressen eine Kurztakt-Presse (KT-Presse). In einer weiteren bevorzugten Ausführungsform ist das Mittel zum Profilieren ebenfalls eine Kurztakt-Presse. Besonders bevorzugt wird die Kurztakt-Presse, mit der das Verpressen durchgeführt wird, auch für die Profilierung verwendet. Die Weiterverarbeitung beim Imprägnieren, Verpressen und Profilieren wurde bereits näher beschrieben. In einer Ausführungsform umfasst die Vorrichtung mehrere Mittel zur Weiterverarbeitung eines auf ein Trägermaterial gedruckten Dekors. Dies kann eine Kombination der bereits genannten Mittel zur Weiterverarbeitung eines auf ein Trägermaterial gedruckten Dekors sein.

Die Recheneinheit ist beispielsweise ein geeigneter PC oder Prozessrechner, der bevorzugt in der Vorrichtung integriert ist. Die Recheneinheit kann aber auch nicht in der Vorrichtung integriert sein und damit extern angeordnet sein. In diesem Fall weist die Vorrichtung eine Schnittstelle für die Recheneinheit auf.

Digitale Drucker sind dem Fachmann bekannt. Insbesondere geeignet sind digitale Drucker für den Dekordruck im industriellen Bereich.

In einer weiteren Ausführungsform der erfindungsgemäßen Vorrichtung umfasst diese weiterhin ein optisches Kamerasystem, umfassend mindestens eine Kamera. In einer Ausführungsform der vorliegenden Erfindung umfasst das optische Kamerasystem mehrere Einzelkameras, bevorzugt 2 bis 6 Einzelkameras, besonders bevorzugt 2 bis 4 Einzelkameras. In einer weiteren Ausführungsform der vorliegenden Erfindung umfasst das optische Kamerasystem genau eine Kamera. Durch das optische Kamerasystem können ergänzenden zu der hyperspektralen Flächenmessung Bilder der gedruckten Tonwertstufen erfasst werden. Aus den Bildern des Kamerasystems können farbmetrische Daten für den L* Wert ermittelt werden.

Die Merkmale und Vorteile des Verfahrens treffen auch auf die erfindungsgemäße Vorrichtung zu und umgekehrt.

Im Folgenden wird die vorliegende Erfindung anhand von 2 Figuren und 8 Ausführungsbeispielen näher erläutert.
- **Figur 1**: stellt schematisch eine Ausführungsform des erfindungsgemäßen Verfahrens dar;
- **Figur 2**: stellt eine Ausführungsform eines gedruckten Tonwerttargets dar.

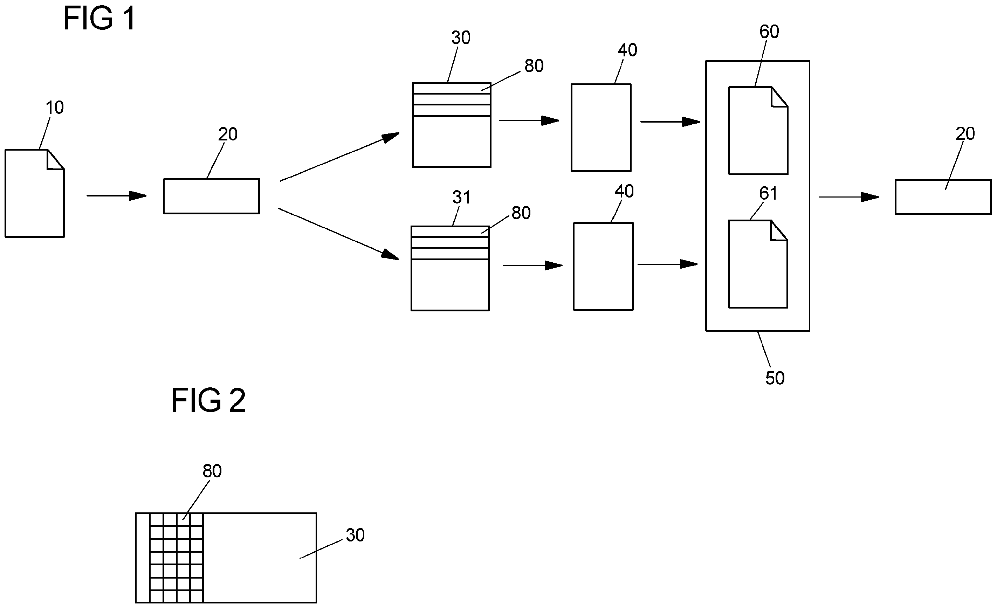

**Figur 1** stellt schematisch eine Ausführungsform des erfindungsgemäßen Verfahrens dar. Es wird ein Tonwerttarget 10 erstellt, welches durch den digitalen Drucker 20 auf ein erstes Trägermaterial 30 aufgedruckt wird. Die Tonwertfelder 80 werden zumindest teilweise durch ein hyperspektrales Flächenmessgerät 40 vermessen und die Daten werden in einer Recheneinheit 50 verarbeitet. Durch die Recheneinheit 50 wird ein digitales Referenzmuster 60 erstellt. Das Tonwerttarget 10 wird auf ein zweites Trägermaterial 31 ausgegeben und zumindest ein Teil der Tonwertfelder 80 werden wiederum hyperspektral durch ein hyperspektrales Flächenmessgerät 40 vermessen. Die Daten werden in der Recheneinheit 50 ausgewertet und es wird ein digitales Muster 61 erstellt. Durch die Recheneinheit 50 werden das digitale Referenzmuster 60 und das digitale Muster 61 miteinander verglichen und mindestens ein Ähnlichkeitswert ermittelt. Liegt der mindestens eine Ähnlichkeitswert außerhalb eines vorgegebenen Toleranzbereichs, erfolgt eine Anpassung mindestens eines Druckerparameters oder einer Kombination mehrerer Druckerparameter des digitalen Druckers 20.

**Figur 2** stellt eine Ausführungsform eines gedruckten Tonwerttargets dar, bei dem die Tonwertfelder 80 des Tonwerttargets nur im Randbereich des Trägermaterials 30 aufgebracht sind.

### Ausführungsbeispiel 1 - Offline - manuelle hyperspektrale Flächenmessung und Anpassung der Separationsdaten mittels Software

Für eine CRYK-Farbsystem wurde ein Tonwerttarget erstellt. Das Tonwerttarget umfasste je Farbbestandteil 40 Tonwertfelder mit abgestuften Tonwerten. Die Tonwerte aufeinanderfolgender Tonwertfelder eines Farbbestandteils unterschieden sich jeweils um 2,5% im Tonwert. Anschließend wurden auf einer 4-Farb-CRYK-Papierdigitaldruckanlage mit einer Druckbreite von 210 cm zwischen einer Breite von 50 cm und einer Breite von 54 cm des Trägermaterials je Farbbestandteil des Farbsystems CRYK die 40 Tonwertfelder mit abgestuften Tonwerten in Richtung der Drucklänge hintereinander gedruckt. Die einzelnen Tonwertfelder waren jeweils 10x10 mm groß und die Tonwertfelder der einzelnen Farbbestandteile waren in Druckbreite nebeneinander angeordnet. Die Anordnung der Tonwertfelder entspricht der in Figur 2 dargestellten Anordnung. Diese wurden offline mit einem hyperspektralen Flächenmessgerät vermessen und für jedes der 160 Tonwertfelder wurde jeweils ein L*-, a*- und ein b*-Wert errechnet gespeichert. Als Trägermaterial wurde ein Papier verwendet.

Aus den gemittelten Referenzwerten der 160 Tonwertfelder wurde ein digitales Referenzmuster erstellt, welches unter anderem für jedes Tonwertfeld L*a*b*-Werte umfasste.

Täglich wurde das Tonwerttarget erneut auf der 4-Farb-CRYK-Papierdigitaldruckanlage mit einer Druckbreite von 210 cm zwischen einer Breite von 50 cm und einer Breite von 54 cm des Trägermaterials ausgegeben. Die Art des Trägermaterials war jeweils die gleiche und auch die Druckbedingungen waren unverändert. Die ausgegebenen Tonwerttargets wurden jeweils hyperspektral vermessen und mit dem optischen Kamerasystem wurden Bilder über die gesamte Druckbreite aller Tonwertfelder aufgenommen. Aus den Messdaten wurde an jedem Tag ein digitales Muster erstellt, welches mit dem digitalen Referenzmuster verglichen wurde. Es wurde ein Toleranzbereich von ±2% vorgegeben.

Am 6. Tag ergab die Messung eine Abweichung im digitalen Muster im Vergleich zum digitalen Referenzmuster. Der Vergleich ergab einen um 1,4 erhöhten b*-Wert für alle Tonwertstufen ab der 60% Tonwertstufe. Die ergab einen Ähnlichkeitswert von 4 % für die entsprechenden b*-Werte. Diese Ähnlichkeitswerte lagen damit außerhalb des Toleranzbereichs von ±2%. Im Druckbild äußert sich dies durch einen Gelbstich.

Die Tonwertabstufungen hatten sich demnach verschoben und lagen nicht mehr gleichmäßig in 2,5% Stufen verteilt vor. Da der Ähnlichkeitswert damit außerhalb des Toleranzbereiches von ±2% lag, wurden mittels eines Softwarefilters die Separationsdaten derart beeinflusst, dass die Abweichung ausgeglichen wurde. Die Anpassung konnte für alle Druckkopfbereiche übernommen werden.

Es wurde anschließend ein weiteres Mal das Tonwerttarget auf der 4-Farb-CRYK-Papierdigitaldruckanlage mit einer Druckbreite von 210 cm zwischen einer Breite von 50 cm und einer Breite von 54 cm des Trägermaterials ausgegeben. Dabei wurde der Softwarefilter für die Separationsdaten genutzt. Die Art des Trägermaterials war unverändert, ebenso wie die Druckbedingungen. Die ausgegebenen Tonwerttargets wurden erneut hyperspektral vermessen. Aus den Messdaten wurde wiederum ein digitales Muster erstellt, welches mit dem digitalen Referenzmuster verglichen wurde. Es konnten keine Abweichungen zwischen dem digitalen Muster und dem digitalen Referenzmuster festgestellt werden. Der Ähnlichkeitswert betrug für alle Tonwertfelder 0% und lag damit innerhalb des Toleranzbereiches.

In einem nächsten Schritt wurde ein weiteres Tonwerttarget erstellt, das die gleichen Tonwerte wie das erste Tonwerttarget aufwies. Die Tonwertfelder des weiteren Tonwerttargets wiesen eine Breite auf, die der Breite des Trägermaterials entsprach. Es wurden alle 40 Tonwertfelder je Farbbestandteil in Drucklänge hintereinander auf dem Trägermaterial ausgegeben. Die Druckanlage besaß ein optisches Kamerasystem, mit dem Bilder über die gesamte Druckbreite aller Tonwertfelder aufgenommen wurden. Das Kamerasystem umfasste 4 Einzelkameras, mit denen jeweils ein Bild aufgenommen wurde. Aus den 4 Einzelbildern pro Zeile wurde dann ein zusammengesetztes Bild erstellt, welches die gesamte Breite des Trägermaterials abbildete. Das heißt, es wurden 160 Zeilen (wobei jede Zeile je eine Abstufung der Tonwerte jedes Farbbestandteile des CRYK-Farbsystems aufwies) in Richtung der Drucklänge gedruckt und erfasst. Anhand des Bildes konnten alle Druckköpfe bzw. deren einzelne Abschnitte in 10 Pixel Einheiten den gedruckten Tonwertfeldern zugeordnet werden. Für jeden Bereich eines Tonwertfeldes, der von einem Druckkopf gedruckt wurde, wurde aus dem optischen Bild ein L*-Wert berechnet. Jeder L*-Wert wurde mit dem L*-Wert für diese Tonwertstufe aus dem digitalen Referenzmuster ins Verhältnis gesetzt und ein Kalibrierfaktor gebildet. Die Kalibrierfaktoren einer Tonwertstufe wurden mit einem Referenzwert verglichen und jeweils ein Ähnlichkeitswert bestimmt. Als Referenzwert wurde dabei der Kalibrierfaktor genutzt, der für die L*-Werte der bereits in den vorangegangenen Verfahrensschritten a) bis m) angepassten Druckerköpfe berechnet wurde. Alle weiteren Kalibrierfaktoren innerhalb eines Tonwertfeldes wurden jeweils mit diesem Kalibrierfaktor verglichen und es wurde jeweils ein Ähnlichkeitswert ermittelt. Für den Ähnlichkeitswert wurde ein Toleranzbereich von ± 0,5% vorgegeben. Keiner der Ähnlichkeitswerte lag außerhalb dieses Toleranzbereiches. An den Druckerköpfen mussten daher keine weiteren Anpassungen vorgenommen werden. Somit konnten alle Druckerköpfe angepasst werden, obwohl nicht das gesamte Tonwerttarget hyperspektral vermessen wurde.

### Ausführungsbeispiel 2 - Inline hyperspektrale Flächenmessung und Anpassung der Separationsdaten mittels Software

Für eine CRYK-Farbsystem wurde ein Tonwerttarget erstellt. Das Tonwerttarget umfasste je Farbbestandteil 40 Tonwertfelder mit abgestuften Tonwerten. Die Tonwerte aufeinanderfolgender Tonwertfelder eines Farbbestandteils unterschieden sich jeweils um 2,5% im Tonwert. Auf einer 4-Farb-CRYK-Papierdigitaldruckanlage mit einer Druckbreite von 210 cm wurde jeweils ein Tonwertfeld über die gesamte Breite des Trägermaterials gedruckt. Jedes Tonwertfeld wies eine Länge von 15 mm in Richtung der Drucklänge auf und die einzelnen Tonwertfelder wurden in Richtung der Drucklänge hintereinander angeordnet gedruckt. Es wurden alle Tonwertfelder des Tonwerttargets ausgegeben. Als Trägermaterial wurde ein Papier verwendet.

Die Tonwertfelder wurden inline mit einem traversierenden hyperspektralen Flächenmessgerät vermessen. Dabei wurde ein Bereich mit einer Druckbreite von 0,3 mm einem Druckkopf- bzw. Separationsdatenbereichen zugeordnet. Die gesamte Breite eines Tonwertfeldes wurde damit in mehrere Einzelbereiche eingeteilt. Bei der Auswertung werden hyperspektrale Mittelwerte aus den Einzelbereichen im Format 0,3x15 mm erfasst. Aus den Messdaten wurden L*a*b*-Werte berechnet und ein digitales Referenzmuster erstellt. Es wurde ein Toleranzbereich von ±2% vorgegeben.

Das Tonwerttarget wurde am nächsten Tag erneut auf der 4-Farb-CRYK-Papierdigitaldruckanlage gedruckt, wobei die gleiche Art von Trägermaterial, die gleichen Druckbedingungen und die gleichen Druckerparameter verwendet wurden. Erneut wurden die Tonwertfelder inline mit dem traversierenden hyperspektralen Flächenmessgerät vermessen. Es wurde für die Auswertung die gleiche Einteilung der Tonwertfelder in Einzelbereiche vorgenommen, wie bereits bei der Erstellung des digitalen Referenzmusters. Aus den Messwerten wurden L*a*b*-Werte berechnet und ein digitales Muster erstellt, welches mit dem digitalen Referenzmuster verglichen wurde.

Es stellte sich heraus, dass insgesamt in 23 Tonwertfelder bei 38 Druckköpfen eine Abweichung um mehr als 2,5% stattgefunden hat. Der Ähnlichkeitswert dieser Tonwertfelder bei den Druckpositionen der 38 Druckköpfe lag damit bei 2,5% und somit außerhalb des Toleranzbereichs. Die Separationsdaten wurden daraufhin automatisiert mit einem Softwarefilter angepasst. Mit den alten Separationsdaten ohne Softwarefilter hätten einige Druckvorlagen nicht mehr farbverbindlich gedruckt werden können, dieses Problem konnte umgangen werden, womit die Druckqualität gesteigert werden konnte.

### Ausführungsbeispiel 3 - Hyperspektrale Flächenmessung inline und Kombination aus Anpassung der Separationsdaten mittels Software und Steuerung der elektrischen Spannung der Druckköpfe

Auf einer 4-Farb-CRYK-Papierdigitaldruckanlage mit einer Druckbreite von 210 cm wurde ein Holzdekor gedruckt. Es wurde ein täglicher Druckqualitätscheck durchgeführt, um z.B. Druckköpfe bezüglich ihrer Intensität/Dichte zu überprüfen, da diese dazu neigen, mit der Zeit an Farbintensität/Dichte zu verlieren bzw. schwächer zu werden.

Zur Kontrolle wurde das CRYK-Farbsystem wurde ein Tonwerttarget erstellt. Das Tonwerttarget umfasst je Farbbestandteil ein Tonwertfeld welches einen Tonwert von 100% aufwies. Die Tonwertfelder der 4 Farbbestandteile des CRYK-Farbsystems wurden jeweils über die gesamte Breite auf das Trägermaterial ausgeben und mit einem traversierenden hyperspektralen Farbmessgerät vermessen. Der Messbereich betrug 15 mm in Drucklänge und 1 mm in Druckbreite, wobei die erfassten Daten gemittelt werden.

In diesen Fall war die Traverse in 4 Bereiche unterteilt, an denen das hyperspektrale Flächenmessgerät die Messdaten erfasst. Aus den Messdaten wurden L*a*b*-Werte berechnet und ein digitales Referenzmuster erstellt. Das Trägermaterial entsprach dem Trägermaterial, welches im Dekordruck verwendet wurde.

Am nächsten Tag wurde das Tonwerttarget erneut durch die 4-Farb-CRYK-Papierdigitaldruckanlage auf ein Trägermaterial ausgegeben. Es wurde die gleiche Art von Trägermaterial verwendet und auch die Druckbedingungen und Druckerparameter waren unverändert. Die Tonwertfelder der 4 Farbbestandteile des CRYK-Farbsystems wurden mit dem traversierenden hyperspektralen Farbmessgerät vermessen. Der Messbereich betrug 15 mm in Drucklänge und 1 mm in Druckbreite, wobei die erfassten Daten gemittelt werden. Es wurden L*a*b*-Werte berechnet und ein digitales Muster erstellt, welches mit dem digitalen Referenzmuster verglichen wurde, wobei für jedes Tonwertfeld mehrere Ähnlichkeitswerte ermittelt wurden, die den einzelnen Druckköpfen zugeordnet wurden. Es wurde ein Toleranzbereich von ±2% vorgegeben.

Der Vergleich des digitalen Musters mit dem digitalen Referenzmuster zeigte das der Ähnlichkeitswert von 5 Druckköpfen 7% betrug und damit außerhalb des Toleranzbereichs lag. Allein durch Colormanagement oder Softwaresteuerung der Separationsdaten war dies physikalisch nicht mehr korrigierbar. Anhand der flächig hyperspektral gemessenen Tonwerte, die dem digitalen Referenzmuster zu Grunde lagen, sowie der ermittelten Abweichung von diesen im digitalen Muster konnte die elektrische Spannung mittels Software automatisch an den 4 abweichenden Druckköpfen angehoben und damit korrigiert werden. Die Druckköpfe waren jetzt alle so eingestellt, dass jeder Druckkopf in allen Bereichen den 100% Tonwert erreichen konnte.

### Ausführungsbeispiel 4

Es wurde zunächst das im Ausführungsbeispiel 3 beschriebene Verfahren durchgeführt. Da sich über die elektrische Spannung aber nur größere Bereiche oder ganze Druckköpfe einheitlich einstellen lassen, wurde in einem zweiten Schritt das im Ausführungsbeispiel 2 beschriebene Verfahren durchgeführt. Das Ergebnis war eine in der Druckbreite homogene Ausgabe aller Tonwertstufen im Druck. Dieses Verfahren kann regelmäßig manuell oder vollautomatisiert durchgeführt werden, um eine Qualitätsüberprüfung in Druckprozessen zu gewährleisten.

### Ausführungsbeispiel 5

Als reine Kontrolle während Produktionen wurden in einem oder beiden Randbereichen eines Dekordruckauftrages verschiedene Tonwertstufen dauerhaft wiederkehrend mitgedruckt und hyperspektral flächig ausgemessen. In einem ersten Verfahrensablauf wurde hierbei ein digitales Referenzmuster erstellt, welches in den weiteren Verfahrensschritten zum Vergleich herangezogen wurde. Hierdurch konnten Veränderungen der Tonwerte der Druckköpfe, die mit der Zeit auftraten, im Randbereich detektiert werden. Bei Abweichungen wurden Warnmeldungen ausgegeben und es wurde eine automatische Anpassung eines Druckerparameters oder einer Kombination von Druckerparametern vorgenommen. Die Anpassung wurde dabei für alle Druckköpfe über die gesamte Druckbreite des Druckers vorgenommen. Eine Korrektur konnte damit vorgenommen werden, ohne dass Druckdaten neu generiert werden mussten oder ein zeitaufwendiger Colormanagementprozess anlief.

### Ausführungsbeispiel 6 - Tintencharge Abweichung

In einem Druckprozess wurde die Tintencharge für den Farbbestandteil Cyan ausgewechselt. Die neue Charge ist im Tonwert jedoch heller als die alte. Bei der Durchführung des Verfahrens wie in den Ausführungsbeispielen 1 bis 4 beschreiben, schlug sich dies in eine Abweichung des Tonwertes zwischen dem digitalen Referenzmuster und dem digitalen Muster nieder, da das digitale Referenzmuster auf Basis des Drucks eines Tonwerttargets mit der alten Tintencharge erstellt wurde und das digitale Muster auf Basis des Drucks eines Tonwerttargets mit der neuen Tintencharge. Der detektierte Unterschied wurde durch eine Anpassung mindestens eines Druckerparameters oder einer Kombination von Druckerparametern korrigiert. Abweichungen im Tonwert, die durch eine neue Tintencharge verursacht werden, konnten damit ausgeglichen werden.

### Ausführungsbeispiel 7 - Papiercharge Abweichung

In einem Druckprozess wurde eine neue Papiercharge genutzt. Diese war etwas heller als die bisher genutzten mit einem L* Wert von ca. L*=1,10. Das Verfahren wurde analog dem im Ausführungsbeispiel 6 beschriebenen Verfahren durchgeführt, wobei das digitale Referenzmuster auf Basis des Drucks eines Tonwerttargets auf die alte Papiercharge erstellt wurde und das digitale Muster auf Basis des Drucks eines Tonwerttargets auf die neue Papiercharge. Aufgrund der detektierten Abweichung wurde die elektrische Spannung aller Druckkopfbereiche angehoben, wodurch die fehlende Intensität in den Tonwerten korrigiert werden konnte und in einem anschließenden Druckprozess Dekore farbverbindlich gedruckt werden konnten.

### Ausführungsbeispiel 8 - Kalibrierung von zwei Digitaldruckern

Für eine CRYK-Farbsystem wurde ein Tonwerttarget erstellt. Das Tonwerttarget umfasste je Farbbestandteil 40 Tonwertfelder mit abgestuften Tonwerten. Die Tonwerte aufeinanderfolgender Tonwertfelder eines Farbbestandteils unterschieden sich jeweils um 2,5% im Tonwert. Auf einer ersten 4-Farb-CRYK-Papierdigitaldruckanlage mit einer Druckbreite von 210 cm wurde jeweils ein Tonwertfeld über die gesamte Breite des Trägermaterials gedruckt, bis das gesamte Tonwerttarget ausgegeben war. Jedes Tonwertfeld wies eine Länge von 15 mm in Richtung der Drucklänge auf und die einzelnen Tonwertfelder wurden in Richtung der Drucklänge hintereinander angeordnet gedruckt. Als Trägermaterial wurde ein Papier verwendet.

Die Tonwertfelder wurden inline mit einem traversierenden hyperspektralen Flächenmessgerät vermessen. Dabei wurde ein Bereich mit einer Druckbreite von 0,3 mm einem Druckkopf- bzw. Separationsdatenbereichen zugeordnet. Die gesamte Breite eines Tonwertfeldes wurde damit in mehrere Einzelbereiche eingeteilt. Bei der Auswertung werden hyperspektrale Mittelwerte aus den Einzelbereichen im Format 0,3x15 mm erfasst. Aus den Messdaten wurden L*a*b*-Werte berechnet und ein digitales Referenzmuster erstellt. Es wurde ein Toleranzbereich von ±2% vorgegeben.

Das Tonwerttarget wurde anschließend auf einer zweiten 4-Farb-CRYK-Papierdigitaldruckanlage gedruckt, wobei die gleiche Art von Trägermaterial verwendet wurde. Erneut wurden die Tonwertfelder inline mit dem traversierenden hyperspektralen Flächenmessgerät vermessen. Es wurde für die Auswertung die gleiche Einteilung der Tonwertfelder in Einzelbereiche vorgenommen, wie bereits bei der Erstellung des digitalen Referenzmusters. Aus den Messwerten wurden dann L*a*b*-Werte berechnet und ein digitales Muster erstellt, welches mit dem digitalen Referenzmuster verglichen wurde. Es wurde für jeden Bereich eines Tonwertfeld, der für die Mittelwertbildung genutzt wurde ein Ähnlichkeitswert berechnet.

Einige der Ähnlichkeitswerte lagen außerhalb des Toleranzbereiches und es wurde eine Anpassung der Separationsdaten und eine Steuerung der elektrischen Spannung der Druckerköpfe der zweiten 4-Farb-CRYK-Papierdigitaldruckanlage vorgenommen. Auf diese Weise konnte die zweite 4-Farb-CRYK-Papierdigitaldruckanlage auf die erste 4-Farb-CRYK-Papierdigitaldruckanlage kalibriert werden.

### Bezugszeichenliste

- 10: Tonwerttarget
- 20: digitaler Drucker
- 30, 31: Trägermaterial
- 40: hyperspektrales Flächenmessgerät
- 50: Recheneinheit
- 60: digitales Referenzmuster
- 61: digitales Muster
- 80: Tonwertfeld

## Patentansprüche

1. Verfahren zur Anpassung der Druckerparameter und/oder der Separationsdaten eines digitalen Druckers, aufweisend die Schritte,
a) Erstellen und Speichern eines digitalen Tonwerttargets mit 1 bis n Tonwertfeldern, wobei n ∈ N;
b) Ausgabe des Tonwerttargets auf ein erstes Trägermaterial unter ersten Druckbedingungen mit ersten Druckerparametern durch einen ersten digitalen Drucker;
c) Hyperspektrales flächiges vermessen zumindest eines Teils des in Schritt b) ausgegebenen Tonwerttargets, wobei mindestens die Fläche des Tonwerttargets hyperspektral vermessen wird, die von einem Druckerkopf im Druck abgedeckt wird und wobei beim hyperspektralen flächigen Vermessen Daten aufgezeichnet werden, deren Wellenlängenbereiche aneinandergrenzen;
d) Bildung von mindestens einem Mittelwert der hyperspektralen Daten zugeordnet zu einem Bereich eines Tonwertfeldes eines Tonwerttargets, der von einem Druckerkopf im Druck abgedeckt wird;
e) Errechnen von farbmetrischen Daten und/oder Farbdichtewerten aus dem mindestens einen Mittelwert der hyperspektralen Daten;
f) Erstellen eines digitalen Referenzmusters, aufweisend mindestens die farbmetrischen Daten und/oder die Farbdichtewerte zugeordnet zu dem Bereich des Tonwertfeldes, der für die Bildung des mindestens einen Mittelwerts der hyperspektralen Daten verwendet wurde;
g) Ausgabe des digitalen Tonwerttargets auf ein zweites Trägermaterial unter zweiten Druckbedingungen mit zweiten Druckerparametern durch den ersten digitalen Drucker oder einen zweiten digitalen Drucker;
h) Hyperspektrales flächiges vermessen zumindest eines Teils des in Schritt g) ausgegebenen Tonwerttargets, wobei mindestens die Fläche des Tonwerttargets hyperspektral vermessen wird, die von einem Druckerkopf im Druck abgedeckt wird und wobei beim hyperspektralen flächigen Vermessen Daten aufgezeichnet werden, deren Wellenlängenbereiche aneinandergrenzen;
i) Bildung von mindestens einem Mittelwert der hyperspektralen Daten zugeordnet zu einem Bereich eines Tonwertfeldes eines Tonwerttargets, der von einem Druckerkopf im Druck abgedeckt wird;
j) Errechnen von farbmetrischen Daten und/oder Farbdichtewerten aus dem mindestens einen Mittelwert der hyperspektralen Daten;
k) Erstellen eines digitalen Musters, aufweisend mindestens die farbmetrischen Daten und/oder die Farbdichtewerte zugeordnet zu dem Bereich des Tonwertfeldes, der für die Bildung des mindestens einen Mittelwerts der hyperspektralen Daten verwendet wurde;
l) Vergleich des digitalen Referenzmusters mit dem digitalen Muster und ermitteln von mindestens einem Ähnlichkeitswert; und
m) Anpassen mindestens eines Druckerparameters und/oder der Separationsdaten oder einer Kombination mehrerer Druckerparameter oder einer Kombination mehrerer Druckerparameter und der Separationsdaten des ersten oder zweiten digitalen Druckers, wenn der mindestens eine Ähnlichkeitswert außerhalb mindestens eines vorgegebenen Toleranzbereichs liegt, wobei die Druckerparameter ausgewählt sind aus der Gruppe aufweisend elektrische Spannung im Druckerkopf, Softwaresteuerung des Druckers und Temperatur.

2. Verfahren gemäß Anspruch 1, **dadurch gekennzeichnet, dass** die ersten Druckbedingungen und die zweiten Druckbedingungen, sowie das erste und das zweite Trägermaterial gleich sind.

3. Verfahren gemäß einem der vorangegangenen Ansprüche, **dadurch gekennzeichnet, dass**
• im Verfahrensschritt d) und i) Mittelwerte der hyperspektralen Daten zugeordnet zu verschiedenen Bereichen von Tonwertfeldern eines Tonwerttargets gebildet werden, wobei die verschiedenen Bereiche der Tonwertfelder eines Tonwerttargets jeweils von einem Druckerkopf im Druck abgedeckt werden;
• in Verfahrensschritt e) und j) farbmetrischen Daten und/oder Farbdichtewerten aus jedem Mittelwert der hyperspektralen Daten errechnet werden;
• in Verfahrensschritt f) ein digitales Referenzmuster erstellt wird, welches die farbmetrischen Daten und/oder die Farbdichtewerte zugeordnet zu den Bereichen der Tonwertfelder, die für die Bildung der Mittelwerte der hyperspektralen Daten verwendet wurden aufweist; und
• in Verfahrensschritt k) ein digitales Muster erstellt wird, welches die farbmetrischen Daten und/oder die Farbdichtewerte zugeordnet zu den Bereichen der Tonwertfelder, die für die Bildung der Mittelwerte der hyperspektralen Daten verwendet wurden aufweist.

4. Verfahren gemäß einem der vorangegangenen Ansprüche, **dadurch gekennzeichnet, dass** der Vergleich des digitalen Referenzmusters mit dem digitalen Muster im Verfahrensschritt I) manuell oder automatisiert erfolgt.

5. Verfahren gemäß einem der vorangegangenen Ansprüche, **dadurch gekennzeichnet, dass** der mindestens eine Ähnlichkeitswert als Abweichung zwischen farbmetrischen Daten, insbesondere L*a*b*-Werten und/oder als Abweichungen zwischen Farbdichtewerten und/oder als Farbabstand ΔE und/oder als Ähnlichkeitsindex vorliegen.

6. Verfahren gemäß einem der vorangegangenen Ansprüche, **dadurch gekennzeichnet, dass** die Anpassung des mindestens einen Druckerparameters oder einer Kombination mehrerer Druckerparameter des ersten oder zweiten digitalen Druckers automatisch oder manuell erfolgt.

7. Verfahren gemäß einem der vorangegangenen Ansprüche, **dadurch gekennzeichnet, dass** die Verfahrensschritte g) bis m) so oft durchlaufen werden, der Ähnlichkeitswert innerhalb des mindestens einen vorgegebenen Toleranzbereichs liegt.

8. Verfahren gemäß einem der vorangegangenen Ansprüche, **dadurch gekennzeichnet, dass** die Verfahrensschritte g) bis m) nach einer vorgegebenen Zeit wiederholt werden.

9. Verfahren gemäß einem der vorangegangenen Ansprüche, **dadurch gekennzeichnet, dass** das Trägermaterial ausgewählt ist aus der Gruppe aufweisend Papier, Glas, Metall, Folien, Holzwerkstoffplatten, insbesondere MDF- oder HDF-Platten, WPC-Platten, Furniere, Lackschichten, Kunststoffplatten und anorganische Trägerplatten.

10. Verfahren gemäß einem der vorangegangenen Ansprüche, **dadurch gekennzeichnet, dass** auf das zweite Trägermaterial neben dem Tonwerttarget ein Dekor aufgedruckt wird, wobei das Dekor mit dem gleichen digitalen Drucker auf das zweite Trägermaterial gedruckt wird wie das Tonwerttarget.

11. Verfahren gemäß einem der vorangegangenen Ansprüche, **dadurch gekennzeichnet, dass** weiterhin nach dem Anpassen mindestens eines Druckerparameters oder einer Kombination mehrerer Druckerparameter ein Dekor auf das zweite Trägermaterial gedruckt wird, wobei das Dekor mit dem gleichen digitalen Drucker auf das zweite Trägermaterial gedruckt wird wie das Tonwerttarget.

12. Verfahren gemäß einem der vorangegangenen Ansprüche, **dadurch gekennzeichnet, dass** das Verfahren inline in einem Druckprozess integriert ist oder offline durchgeführt wird.

13. Verfahren gemäß einem der vorangegangenen Ansprüche, **dadurch gekennzeichnet, dass** das Verfahren weiterhin die Schritte umfasst
n) Optional Erstellen und Ausgabe eines weiteren Tonwerttargets auf ein Trägermaterial mit einem ersten oder zweiten digitalen Drucker, wobei jedes Tonwertfeld des Tonwerttargets über die gesamte Breite des Trägermaterials ausgegeben wird;
o) Aufnahme mindestens eines Bildes des im Verfahrensschritt g) oder im Verfahrensschritt n) ausgegebenen Tonwerttargets mit einem optischen Kamerasystem;
p) Berechnen der L*-Werte für jeden Bereich eines Tonwertfeldes aus dem mindestens einen Bild, der einem Druckerkopf zugeordnet werden kann;
q) Berechnen von Kalibrierfaktoren mit den L*-Werten aus dem mindestens einen Bild und den L*-Werten des digitalen Referenzmusters;
r) Vergleich der Kalibrierfaktoren und berechnen von mindestens einem Ähnlichkeitswert; und
s) Anpassen mindestens eines Druckerparameters oder einer Kombination mehrerer Druckerparameter des ersten oder zweiten digitalen Druckers, wenn der mindestens eine Ähnlichkeitswert außerhalb mindestens eines vorgegebenen Toleranzbereichs liegt.

14. Vorrichtung, insbesondere Druckanlage, dazu eingerichtet ein Verfahren zur Anpassung der Druckerparameter und/oder der Separationsdaten eines digitalen Druckers gemäß einem der Ansprüche 1 bis 13 durchzuführen, wobei die Vorrichtung
• Mindestens ein hyperspektrales Flächenmessgerät;
• Mindestens eine Recheneinheit;
• Mindestens einen ersten digitalen Drucker zum Drucken eines Tonwerttargets;
• Optional einen zweiten digitalen Drucker zum Drucken eines Tonwerttargets; und
• Optional mindestens ein Mittel zur Weiterverarbeitung eines auf ein Trägermaterial gedruckten Dekors
aufweist.

15. Vorrichtung gemäß Anspruch 14, weiterhin aufweisend ein optisches Kamerasystem.

## Claims

1. Method for adjusting the printer parameters and/or the separation data of a digital printer, comprising the steps of
a) creating and saving a digital tone value target with 1 to n tone value fields, where n _{E} N;
b) outputting the tone value target onto a first carrier material under first printing conditions with first printer parameters by a first digital printer;
c) hyperspectral areal measurement of at least a portion of the tone value target output in step b), wherein at least the surface area of the tone value target covered by a printhead during printing is measured in a hyperspectral manner and wherein, during the hyperspectral areal measurement, data is recorded of which the wavelength ranges are adjacent to one another;
d) generating at least one mean value of the hyperspectral data associated with a region of a tone value field of a tone value target covered by a printhead during printing;
e) calculating colorimetric data and/or color density values from the at least one mean value of the hyperspectral data;
f) creating a digital reference pattern comprising at least the colorimetric data and/or the color density values associated with the region of the tone value field used to generate the at least one mean value of the hyperspectral data;
g) outputting the digital tone value target onto a second carrier material under second printing conditions with second printer parameters by the first digital printer or a second digital printer;
h) hyperspectral areal measurement of at least a portion of the tone value target output in step g), wherein at least the surface area of the tone value target covered by a printhead during printing is measured in a hyperspectral manner and wherein, during the hyperspectral areal measurement, data is recorded of which the wavelength ranges are adjacent to one another;
i) generating at least one mean value of the hyperspectral data associated with a region of a tone value field of a tone value target covered by a printhead during printing;
j) calculating colorimetric data and/or color density values from the at least one mean value of the hyperspectral data;
k) creating a digital pattern comprising at least the colorimetric data and/or the color density values associated with the region of the tone value field used to generate the at least one mean value of the hyperspectral data;
l) comparing the digital reference pattern with the digital pattern and determining at least one similarity value; and
m) adjusting at least one printer parameter and/or the separation data or a combination of a plurality of printer parameters or a combination of a plurality of printer parameters and the separation data of the first or second digital printer if the at least one similarity value is outside at least one predetermined tolerance range, wherein the printer parameters are selected from the group comprising electrical voltage in the printhead, software control of the printer and temperature.

2. Method according to claim 1, **characterized in that** the first printing conditions and the second printing conditions, as well as the first and the second carrier material, are the same.

3. Method according to either of the preceding claims, **characterized in that**
• in method steps d) and i) mean values of the hyperspectral data assigned to different regions of tone value fields of a tone value target are generated, the different regions of the tone value fields of a tone value target each being covered by a printhead during printing;
• in method steps e) and j) colorimetric data and/or color density values are calculated from each mean value of the hyperspectral data;
• in method step f) a digital reference pattern is created which has the colorimetric data and/or the color density values assigned to the regions of the tone value fields which were used to generate the mean values of the hyperspectral data; and
• in method step k) a digital pattern is created which has the colorimetric data and/or the color density values assigned to the regions of the tone value fields which were used to generate the mean values of the hyperspectral data.

4. Method according to any of the preceding claims, **characterized in that** the comparison of the digital reference pattern with the digital pattern in method step l) is carried out manually or automatically.

5. Method according to any of the preceding claims, **characterized in that** the at least one similarity value exists as a deviation between colorimetric data, in particular L*a*b* values, and/or as deviations between color density values and/or as a color distance ΔE and/or as a similarity index.

6. Method according to any of the preceding claims, **characterized in that** the adjustment of the at least one printer parameter or a combination of a plurality of printer parameters of the first or second digital printer is carried out automatically or manually.

7. Method according to any of the preceding claims, **characterized in that** method steps g) to m) are run through as often as necessary until the similarity value is within the at least one specified tolerance range.

8. Method according to any of the preceding claims, **characterized in that** method steps g) to m) are repeated after a specified time.

9. Method according to any of the preceding claims, **characterized in that** the carrier material is selected from the group comprising paper, glass, metal, foils, wood-based panels, in particular MDF or HDF panels, WPC panels, veneers, lacquer layers, plastics panels and inorganic carrier panels.

10. Method according to any of the preceding claims, **characterized in that** a decoration is printed on the second carrier material next to the tone value target, the decoration being printed on the second carrier material using the same digital printer as the tone value target.

11. Method according to any of the preceding claims, **characterized in that** furthermore, after adjusting at least one printer parameter or a combination of a plurality of printer parameters, a decoration is printed on the second carrier material, the decoration being printed on the second carrier material using the same digital printer as the tone value target.

12. Method according to any of the preceding claims, **characterized in that** the method is integrated in-line into a printing process or is carried out offline.

13. Method according to any of the preceding claims, **characterized in that** the method further comprises the steps of
n) optionally creating and outputting a further tone value target onto a carrier material using a first or second digital printer, each tone value field of the tone value target being output across the entire width of the carrier material;
o) recording at least one image of the tone value target output in method step g) or in method step n) with an optical camera system;
p) calculating the L* values for each region of a tone value field from the at least one image that can be assigned to a printhead;
q) calculating calibration factors using the L* values from the at least one image and the L* values of the digital reference pattern;
r) comparison of the calibration factors and calculation of at least one similarity value; and
s) adjusting at least one printer parameter or a combination of a plurality of printer parameters of the first or second digital printer if the at least one similarity value is outside at least one predetermined tolerance range.

14. Device, in particular printing system, designed to carry out a method for adapting the printer parameters and/or the separation data of a digital printer according to any of claims 1 to 13, wherein the device has
• at least one hyperspectral area measuring means;
• at least one computing unit;
• at least a first digital printer for printing a tone value target;
• optionally a second digital printer for printing a tone value target; and
• optionally at least one means for further processing a decoration printed on a carrier material.

15. Device according to claim 14, further comprising an optical camera system.

## Revendications

1. Procédé permettant l'ajustement des paramètres d'imprimante et/ou des données de séparation d'une imprimante numérique, présentant les étapes consistant à
a) créer et stocker une cible de valeur de ton numérique comportant 1 à n champs de valeur de ton, dans lequel n e N ;
b) distribuer la cible de valeur de ton sur un premier matériau de support dans de premières conditions d'impression comportant de premiers paramètres d'imprimante par une première imprimante numérique ;
c) mesurer de manière hyperspectrale en planimétrie au moins une partie de la cible de valeur de ton distribuée à l'étape b), dans lequel au moins la surface de la cible de valeur de ton qui est recouverte par une tête d'impression dans l'impression est mesurée de manière hyperspectrale et dans lequel des données dont les gammes de longueurs d'onde sont contiguës les unes aux autres sont enregistrées lors de la mesure hyperspectrale en planimétrie ;
d) former au moins une valeur moyenne des données hyperspectrales associées à une région d'un champ de valeur de ton d'une cible de valeur de ton recouverte par une tête d'impression dans l'impression ;
e) calculer des données colorimétriques et/ou des valeurs de densité de couleur à partir de l'au moins une valeur moyenne des données hyperspectrales ;
f) créer un motif de référence numérique présentant au moins les données colorimétriques et/ou les valeurs de densité de couleur associées à la région du champ de valeur de ton utilisée pour la formation de l'au moins une valeur moyenne des données hyperspectrales ;
g) distribuer la cible de valeur de ton numérique sur un second matériau de support dans de secondes conditions d'impression comportant de seconds paramètres d'imprimante par la première imprimante numérique ou par une seconde imprimante numérique ;
h) mesurer de manière hyperspectrale en planimétrie au moins une partie de la cible de valeur de ton distribuée à l'étape g), dans lequel au moins la surface de la cible de valeur de ton qui est recouverte par une tête d'impression dans l'impression est mesurée de manière hyperspectrale et dans lequel des données dont les gammes de longueurs d'onde sont contiguës les unes aux autres sont enregistrées lors de la mesure hyperspectrale en planimétrie ;
i) former au moins une valeur moyenne des données hyperspectrales associées à une région d'un champ de valeur de ton d'une cible de valeur de ton recouverte par une tête d'impression dans l'impression ;
j) calculer des données colorimétriques et/ou des valeurs de densité de couleur à partir de l'au moins une valeur moyenne des données hyperspectrales ;
k) créer un motif numérique présentant au moins les données colorimétriques et/ou les valeurs de densité de couleur associées à la région du champ de valeur de ton utilisée pour la formation de l'au moins une valeur moyenne des données hyperspectrales ;
l) comparer le motif de référence numérique au motif numérique et déterminer au moins une valeur de similitude ; et
m) ajuster au moins un paramètre d'imprimante et/ou les données de séparation ou une combinaison de plusieurs paramètres d'imprimante ou une combinaison de plusieurs paramètres d'imprimante et les données de séparation de la première ou de la seconde imprimante numérique si l'au moins une valeur de similitude est en dehors d'au moins une plage de tolérance prédéfinie, dans lequel les paramètres d'imprimante sont choisis dans le groupe présentant une tension électrique dans la tête d'impression, commande logicielle de l'imprimante et température.

2. Procédé selon la revendication 1, **caractérisé en ce que** les premières conditions d'impression et les secondes conditions d'impression, ainsi que le premier et le second matériau de support, sont identiques.

3. Procédé selon l'une des revendications précédentes, **caractérisé en ce que**
• aux étapes de procédé d) et i), des valeurs moyennes des données hyperspectrales associées à différentes régions de champs de valeur de ton d'une cible de valeur de ton sont formées, dans lequel les différentes régions des champs de valeur de ton d'une cible de valeur de ton sont respectivement couvertes par une tête d'impression dans l'impression ;
• aux étapes de procédé e) et j), des données colorimétriques et/ou des valeurs de densité de couleur sont calculées à partir de chaque valeur moyenne des données hyperspectrales ;
• à l'étape de procédé f), un motif de référence numérique est créé, lequel présente les données colorimétriques et/ou les valeurs de densité de couleur associées aux régions des champs de valeur de ton qui ont été utilisées pour la formation des valeurs moyennes des données hyperspectrales ; et
• à l'étape de procédé k), un motif numérique est créé, lequel présente les données colorimétriques et/ou les valeurs de densité de couleur associées aux régions des champs de valeur de ton qui ont été utilisées pour la formation des valeurs moyennes des données hyperspectrales.

4. Procédé selon l'une des revendications précédentes, **caractérisé en ce que** la comparaison du motif de référence numérique au motif numérique à l'étape de procédé l) est effectuée de manière manuelle ou automatisée.

5. Procédé selon l'une des revendications précédentes, **caractérisé en ce que** l'au moins une valeur de similitude est présente en tant que déviation entre des données colorimétriques, en particulier des valeurs L*a*b* et/ou en tant que déviations entre des valeurs de densité de couleur et/ou en tant qu'écart de couleur ΔE et/ou en tant qu'indice de similitude.

6. Procédé selon l'une des revendications précédentes, **caractérisé en ce que** l'ajustement d'au moins un paramètre d'imprimante ou d'une combinaison de plusieurs paramètres d'imprimante de la première ou de la seconde imprimante numérique est effectué de manière automatique ou manuelle.

7. Procédé selon l'une des revendications précédentes, **caractérisé en ce que** les étapes de procédé g) à m) sont exécutées autant de fois que la valeur de similitude se situe à l'intérieur d'au moins une plage de tolérance prédéfinie.

8. Procédé selon l'une des revendications précédentes, **caractérisé en ce que** les étapes de procédé g) à m) sont répétées après un temps prédéfini.

9. Procédé selon l'une des revendications précédentes, **caractérisé en ce que** le matériau de support est choisi dans le groupe présentant du papier, verre, métal, films, panneaux en matériau dérivé du bois, en particulier panneaux MDF ou HDF,
panneaux CBP, contreplacages, couches de vernis, panneaux en matière plastique et panneaux de support inorganiques.

10. Procédé selon l'une des revendications précédentes, **caractérisé en ce qu'un** décor est imprimé sur le second matériau de support outre la cible de valeur de ton, dans lequel le décor est imprimé sur le second matériau de support avec la même imprimante numérique que la cible de valeur de ton.

11. Procédé selon l'une des revendications précédentes, **caractérisé en ce que,** en outre, après l'ajustement d'au moins un paramètre d'imprimante ou d'une combinaison de plusieurs paramètres d'imprimante, un décor est imprimé sur le second matériau de support, dans lequel le décor est imprimé sur le second matériau de support avec la même imprimante numérique que la cible de valeur de ton.

12. Procédé selon l'une des revendications précédentes, **caractérisé en ce que** le procédé est intégré en ligne dans un processus d'impression ou est réalisé hors ligne.

13. Procédé selon l'une des revendications précédentes, **caractérisé en ce que** le procédé comprend en outre les étapes consistant à
n) éventuellement, créer et distribuer une autre cible de valeur de ton sur un matériau de support avec une première ou une seconde imprimante numérique, dans lequel chaque champ de valeur de ton de la cible de valeur de ton est distribué sur toute la largeur du matériau de support ;
o) capturer au moins une image de la cible de valeur de ton distribuée à l'étape de procédé g) ou à l'étape de procédé n) avec un système formant caméra optique ;
p) calculer les valeurs L* pour chaque région d'un champ de valeur de ton à partir de l'au moins une image qui peut être associée à une tête d'impression ;
q) calculer des facteurs d'étalonnage avec les valeurs L* provenant de l'au moins une image et les valeurs L* du motif de référence numérique ;
r) comparer les facteurs d'étalonnage et calculer au moins une valeur de similitude ; et
s) ajuster au moins un paramètre d'imprimante ou une combinaison de plusieurs paramètres d'imprimante de la première ou de la seconde imprimante numérique si l'au moins une valeur de similitude est en dehors d'au moins une plage de tolérance prédéfinie.

14. Dispositif, en particulier installation d'impression, configuré pour réaliser un procédé permettant l'ajustement des paramètres d'imprimante et/ou des données de séparation d'une imprimante numérique selon l'une des revendications 1 à 13, dans lequel le dispositif présente
• au moins un appareil formant planimètre hyperspectral ;
• au moins une unité de calcul ;
• au moins une première imprimante numérique permettant d'imprimer une cible de valeur de ton ;
• éventuellement, une seconde imprimante numérique permettant d'imprimer une cible de valeur de ton ; et
• éventuellement, au moins un moyen permettant le traitement ultérieur d'un décor imprimé sur un matériau de support.

15. Dispositif selon la revendication 14, présentant en outre un système formant caméra optique.
